# EUROPEAN PATENT SPECIFICATION

(11) **EP 3 918 097 B1**
(45) Date of publication and mention of the grant of the patent: **07.06.2023**
(21) Application number: 20701782.3
(22) Date of filing: 30.01.2020
(51) Int. Cl.: C22B 9/04, C22B 9/10, C22B 13/02, C22B 13/06

(54) **IMPROVED METHOD FOR PRODUCING HIGH PURITY LEAD**
VERBESSERTES VERFAHREN ZUR HERSTELLUNG VON HOCHREINEM BLEI
PROCÉDÉ DE PRODUCTION AMÉLIORÉ DE PLOMB PUR

(30) Priority: 30.01.2019 EP 19154606
(43) Date of publication of application: 08.12.2021
(73) Proprietor: AURUBIS BEERSE, 2340 Beerse (BE)
(72) Inventor: GOVAERTS, Koen, 2340 Beerse (BE); LEMMENS, Pelle, 2340 Beerse (BE); MANNAERTS, Kris, 2340 Beerse (BE); GORIS, Jan, Dirk, A., 2340 Beerse (BE); GEENEN, Charles, 2340 Beerse (BE); COLETTI, Bert, 2340 Beerse (BE); DE VISSCHER, Yves, 2340 Beerse (BE)
(74) Representative: Gevers Patents
(86) International application number: PCT/EP2020/052222
(87) International publication number: WO 2020/157165

(56) References cited:
- WO-A1-2018/060202
- GB-A- 2 013 248
- US-A- 3 479 179
- US-A- 5 053 076
- US-A- 5 451 247

## Description

### FIELD OF THE INVENTION

The present invention relates to the production by pyrometallurgy of non-ferrous metals, in particular lead (Pb) and possibly in combination with the production of copper (Cu) and tin (Sn), from primary sources and/or secondary feedstocks. More particularly the present invention relates to the production and recovery of a high purity lead product from a mixture containing primarily lead and tin.

### BACKGROUND OF THE INVENTION

The metal lead represents a major non-ferrous commodity in modern industry, as it has been from antiquity. The lead market of today is primarily dependent on its use in the lead storage battery, and principally the lead-acid battery. The consumption of lead in other use areas, including lead sheet for construction, lead as a barrier for radiation, as deadweight, as protection for underwater cabling, as ammunition and as an alloy metal in brass, is dwarfed by its consumption in the automotive industry.

The winning of lead dates back as far as 5000 B.C. to the ancient Egyptians, for centuries from primary feedstocks, most importantly from galena (lead sulphide - PbS). Lead-rich minerals frequently occur together with other metals, particularly silver, zinc, copper, and sometimes gold. In modern society, lead has also become the most recycled of all commonly used metals. Also in secondary feedstocks, lead is also often present in combination with other metals. For instance, the lead present in the soldering materials is accompanied by significant amounts of other metals, primarily tin, and hard lead may contain readily up to 10%wt of other metals, most commonly antimony. The recovery of high purity lead products from primary and secondary feedstocks therefore requires the refining of a mixture of lead with other non-ferrous metals in order to obtain a high purity lead prime product.

Old practices were using air, at suitably high temperatures, to oxidise the contaminants such as arsenic, antimony, tin, zinc and other easily oxidised metals, as part of the lead "softening or improving" process. But also a large proportion of the lead is simultaneously oxidised in that process. Henry Harris, in GB 189013 and US 1573830, and further referring to US 1674642, discloses a process for the more selective removal of small amounts of As, Sn and/or Sb at "low" temperatures, i.e. about 450°C. The gradual introduction of a suitable strong oxidizer, more particularly NaNOs, in addition to the NaOH and NaCl already in contact with the crude lead, enables the formation of oxysalts of the impurities while minimizing the oxidation of lead. After the treatment step, the caustic melt phase, including the contaminants in an oxidized form, is contacted with water. The remaining NaOH and NaCl from the melt dissolve and end up, together with the oxysalts formed, in the water by-product.

The sodium chloride in the resulting caustic soda solution is stated to reduce the solubility of the antimony compound in this solution. When the melt from the lead treatment is dissolved in water, and the resulting water solution is saturated in sodium chloride, as is preferred, then substantially all of the antimony compound remains insoluble in the solution, and substantially completely precipitates as a separate phase. For that reason, the sodium chloride addition in the lead treatment is high, preferably in excess of the saturation requirement, as used in the examples, though it is stated that further sodium chloride may be added to the solution.

The tin and arsenic compounds are stated to remain soluble in the solution. For more details about the processing of the caustic melt is referred to USSN 1923/0676261, which later published as US 1674642. US 1674642 describes a number of wet chemistry processes comprising at least 4 and up to 7 steps, generating the following product streams: (i) lead granules, (ii) oxysalt of Sb, (iii) oxysalts of As and Sn, (iv) NaCl crystals and (v) a caustic soda solution. Optionally the oxysalts of As and Sn (iii) may be further processed, using CaCOs and/or CaO, to recover the Sn and As separately as precipitates, leaving a further caustic soda solution. Both caustic soda solutions are stated to be suitable for recycle to the lead refining process. All the process steps involve solid/liquid separations, many include also salt crystallisations, all of which require long residence times, hence large holdups and equipment volumes, optionally in combination with complex equipment items such as centrifuges or filtration.

The sodium chloride is stated in US 1573830 to also help mechanically in the separation of the insoluble antimony compounds from the resulting solution, in that the precipitate more readily gravitates or settles out in a better physical form.

US 1779272 describes a simplified wet chemistry process for the selective recovery of sodium stannate, sodium arsenate and sodium antimonite from a salt mixture resulting from the purification of lead by the "so-called Harris process". The starting material is stated to contain sodium chloride and water.

Another effect of the sodium chloride, according to US 1573830, is that the viscosity of the alkali hydroxide melt is increased, which is stated as an advantage when the molten lead is caused to circulate through the molten reagent. We believe the presence of NaCl also reduces the melting temperature of the mixture.

In GB 189013 and US 1573830, as well as in US 1674642, the presence of sodium chloride is considered highly desirable and it is present in all the examples.

US 3479179 discloses, as an alternative to the Harris process, a continuous lead refining process for removing tin, antimony, zinc and arsenic impurities. The process is described as comprising 3 steps, in each one the liquid lead being brought in intimate contact with a supernatant layer of molten sodium hydroxide. In the first step, oxygen access is prevented by the introduction of a protective gas, and at a temperature of 420°C selectively only As and Zn are substantially removed in a separating slag phase, allegedly by forming sodium zincate and sodium arsenate. In step 2, under an oxygen atmosphere of 16% and also at 420°C, tin is selectively oxidised and may be removed. In step 3, under an oxygen atmosphere of 26% and at 500°C, antimony is oxidised. The removal rates obtained for As, Zn, Sn and Sb are respectively 98%, 98%, 80-90% and 80%. The slags formed in each process step may be withdrawn, preferably from a slag recycling system operating on each of the steps, and "taken to further processing". The document is silent about what this further processing should be. The process produces 3 separate slag phases, each concentrated in a different metal (or metals). This implies that the slag phases are processed further along different process paths.

In all processes described above, recovery of at least one of the contaminant metals (and lead in oxidised form) would still require the reduction of the metals from their oxysalts form.

The inventors have found that the presence of NaCl in the "Harris" process according to the cited documents very much impairs the further processing of the caustic melt or one of its oxysalt containing derivatives for the recovery of some or all of its constituents, in particular when at least one pyrometallurgical step would be included.

Another drawback of the conventional Harris process and its alternatives for lead clean-up is their complexity, the use of large amounts of chemicals and energy in the processing of the caustic melt, while the recovered metals (Sb, Sn and As) end up as their oxysalts or other solid precipitate forms, not yet as metal.

At a secondary level, the cumulative amounts of chemicals added, which consumption may optionally be spread over several consecutive iterations in order to achieve the desired lead purity, is thus significantly higher than stoichiometry. The purpose of the present invention is to reduce the consumption of chemicals per ton of pure ("soft") lead produced.

The consumption of chemicals in the "Harris" process or equivalent represents a significant economic burden. In addition, where the dross is recycled upstream into the process, such as in a "top blown rotary converter" (TBRC) at the point where the slag containing most of the PbO and SnO₂ is reduced to create a mixture of primarily lead and tin, often called crude solder, the sodium hydroxide is corrosive to the refractory materials that are used in the upstream metallurgical process steps, when this is in contact with the hot liquid streams.

The present invention aims to obviate or at least mitigate the above described problem and/or to provide improvements generally.

### SUMMARY OF THE INVENTION

According to the invention, there is provided a process as defined in any of the accompanying claims.

In an embodiment, the present invention provides for a process for the production of a purified soft lead product, comprising
a) A first distillation step for distilling lead from a molten solder mixture comprising lead and tin to produce as the overhead product a first concentrated lead stream and as first bottom product a molten crude tin mixture, and
b) A soft lead refining step for removing at least one contaminant selected from the metals arsenic, tin and antimony from the first concentrated lead stream obtained in step a) by treating the first concentrated lead stream at a temperature of less than 600°C with a first base and a first oxidant stronger than air, resulting in the formation of a third supernatant dross containing a metalate compound of the corresponding contaminant metal, followed by separating the third supernatant dross from the purified soft lead stream or product,
whereby the third supernatant dross from step (b) contains at most 1.0%wt of chlorine, preferably at most 1.0%wt of total halogens.

The applicants have found that, in the process for producing a purified soft lead product from a molten solder mixture of tin and lead, having the chemical treatment step (b) being preceded by the first distillation step (a), whereby the first distillation step produces the first concentrated lead stream to be further cleaned as overhead condensate, brings the advantage of reducing the amounts of chemicals and energy that are needed in the chemical treatment step to obtain a soft lead final product.

A further advantage is that the process according to the present invention is able to cope with much more tin in the feedstock, as compared with the Harris process and its alternatives that are known in the art and which have been discussed hereinabove. Yet a further advantage is that the majority of the tin in the process according to the present invention is maintained in its elemental metal form, and not converted into a chemically bound form. It will be shown that the process according to the present invention may readily be made part of an overall process which also produces a high purity tin prime product. The further advantage of the process according to the present invention is thus that the majority of the tin in the process is made available in a more concentrated form which is more convenient as the starting basis for the recovery of a high purity tin prime product.

In the first distillation step (a) most of the tin in the feed stream ends up in the first bottom product. In addition, also significant amounts of As and Sb have a tendency to remain with the tin in the first bottom product of first distillation step (a). The applicants have found that the distillation conditions in step (a) may be further selected such that even lesser amounts of the As, Sb and/or Sn in the feed stream end up in the overhead as a first concentrated lead stream.

Another advantage of the process according to the present invention is that the first bottom product of step (a), which contains most of the tin and a big proportion of any other contaminants, is made available as a molten liquid stream of elemental metals. Only a minor proportion of the tin, arsenic and antimony present in the feed to step (a) ends up in a chemically bound form as part of the third supernatant dross obtained from step (b). This is highly advantageous for the recovery and upgrade of any one of these elements, in comparison with the methods described in the art.

It will be explained further in this document that the first bottom product from step (a) may be a prime candidate for the further recovery of non-ferrous metals, in the first instance a high quality tin prime product. It will also become clear that an increased amount of As and/or Sb that remains with the Sn in the first bottom product of step (a) does not necessarily lead to a higher consumption of chemicals further downstream.

The present invention further brings the advantage of reducing the complexity in the recovery of the metals that are removed by soft lead refining step (b) from the first concentrated lead stream.

The applicants have found that these advantages are particularly important when producing a soft lead final product as a by-product from the non-ferrous metal production starting from secondary feedstocks, in particular from copper production.

As explained below in the detailed description section, the third supernatant dross produced in step (b) contains the removed at least one contaminant, selected from arsenic, tin and antimony, as a metalate compound thereof. The third supernatant dross may further contain leftover plumbate, a compound that may be formed as an intermediate in the contaminant removal step, and of which there may be an excess formed and hence some leftover. The third supernatant dross is formed in step (b) as a solid that comes floating on top of the molten lead underneath. When this dross is removed from the liquid bath, usually also an amount of lead is entrained, albeit fairly limited. The third supernatant dross thus further contains lead metal, because the separation of the dross from the liquid is typically not fully ideal, and the separation prefers to retain some lead metal with the third supernatant dross rather than having dross remaining in the high purity lead product.

The third supernatant dross thus also contains metal values of interest, in particular lead and/or tin, and this in amounts that make the recovery thereof interesting for economic and for ecological reasons. The third supernatant dross is therefore preferably recycled upstream of the process according to the present invention, in a suitable pyrometallurgical step that is part of the upstream process that produces the lead/tin mixture used as the feed for the first distillation step (a).

The applicants have found that the specified low content of chlorine and/or other halogens in the third supernatant dross makes the third supernatant dross more suitable for being introduced into a pyrometallurgical process step, preferably to a process step wherein at least one of the sodium metalates of Sn, Sb and As may be reduced to yield their respective metal Sn, Sb or As, preferably with also the Pb ending up in its elementary form.

The third supernatant dross is more acceptable in the pyrometallurgical process step thanks to its limited chlorine and/or halogen content. The low chlorine content of the third supernatant dross reduces the risk for entrainment of valuable metals into the exhaust gas from any pyrometallurgical process step in which an exhaust gas is produced, and thus also the risk for the formation of sticky solid precipitates on coolers, filters and other equipment items in the exhaust gas treatment equipment associated with such an pyrometallurgical process step.

The metals Sn, Sb and/or As that are recovered from the recycled third supernatant dross, and the associated Pb, are expected to show up as part of the feed to first distillation step (a). In the first distillation step (a), that extra Pb primarily ends up in the first concentrated lead stream as overhead condensate and in the "soft" lead metal prime product derived therefrom, and most of the Sn and Sb metals, as well as an appreciable amount of the As metal, preferentially remains in the Sn-containing first bottom product stream. An important part of these metals therefore does not anymore return as contaminants into soft lead refining step (b). The contaminant metals recovered from the third supernatant dross recycle may then readily be upgraded by conventional means and be upgraded to become of economic value. For instance, the recovered Sn may be recovered as part of a purified Sn metal final prime product obtained from the first bottom product that is left over from first distillation step (a).

The advantage of this dross recycle capability is that it enables an overall process of much lower complexity, in particular in comparison with the very complex wet chemistry recovery paths described in US 1674642 and discussed above.

The suitability of the third supernatant dross for being recycled to a pyrometallurgical process step allows the process according to the present invention to simultaneously remove in one single process step (b) more than one contaminant from the first concentrated lead stream. This represents a significant improvement as compared to the much more complex lead refining steps described in the art.

Another effect of the process according to the present invention is a reduced consumption of chemicals per unit weight of lead that is fed to soft lead refining step (b). The applicants have found, in comparison with GB 189013, US 1573830 and US 1674642, that the chemicals consumption may in most circumstances significantly be reduced. In the first instance, the process according to the present invention does not require the introduction of significant amounts of sodium chloride, an extra compound that is (particularly in US 1573830) highly desired because of its advantageous effects in the further processing of the caustic melt from the chemical treatment of the lead stream.

In the first distillation step (a), many of the usual contaminants in lead production prefer to remain in the bottom stream. The upstream first distillation step (a) therefore functions also already as a partial purification step for the lead product. This extra process step thus reduces the burden of soft lead refining step (b), which results in a reduced chemical consumption relative to the amount of soft lead metal prime product that may be derived from soft lead refining step (b).

In addition, in first distillation step (a), in view of their respective presences in the feed and bottom streams, there is relatively more tin (Sn) that finds its way into the first concentrated Pb overhead stream, as compared to antimony (Sb). The vapour pressure of Sb is higher than this of Sn under the distillation conditions, but the Sn concentration in the liquid phase is significantly, usually an order of magnitude, higher than this of Sb. Another reason is that, under the distillation conditions, Sb likes to form intermetallic compounds with Sn, and the bound Sb is not available for evaporation. These factors explain why the applicants tend to find, relative to their presence in the feed and/or the bottom residue of first distillation step (a), much more Sn than Sb in the first concentrated lead overhead stream.

Sn is more reactive in soft lead refining step (b) and therefore also easier to remove in step (b) than Sb. The presence of first distillation step (a) upstream of soft lead refining step (b) therefore facilitates step (b) because, besides affecting the amounts thereof reaching first distillation step (a), as explained above, it also affects the nature of contaminants that are present in the feed to soft lead refining step (b), more particularly, it results in a contaminant mix that is easier to remove, because of the relatively lower presence of Sb as compared to Sn.

### BRIEF DESCRIPTION OF THE DRAWINGS

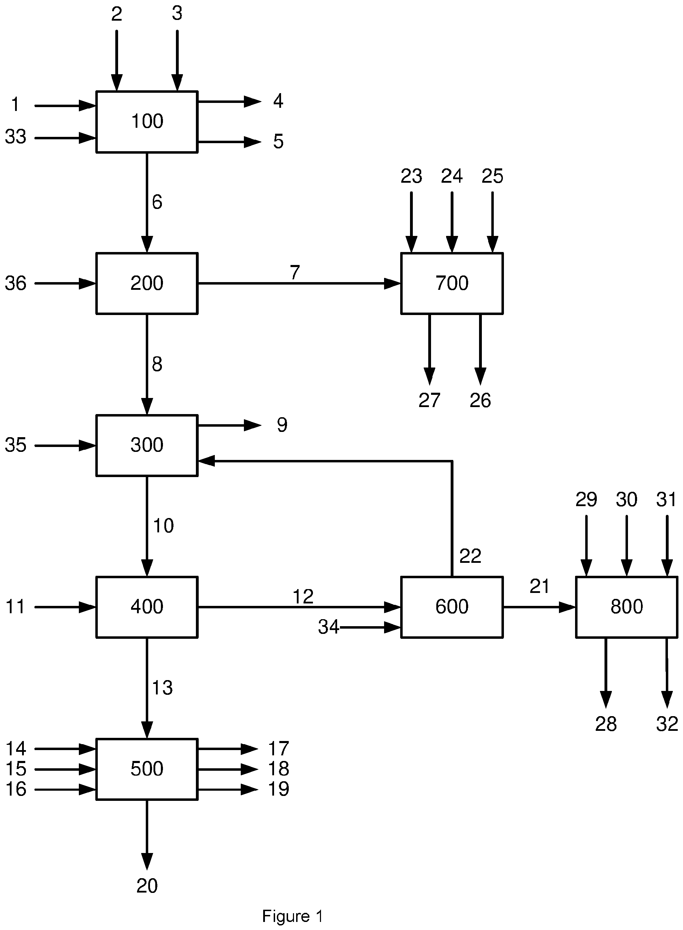

Figure 1 shows a flow diagram of a larger overall process comprising a preferred embodiment of the process according to the present invention.

### DETAILED DESCRIPTION

The present invention will hereinafter be described in particular embodiments, and with possible reference to particular drawings, but the invention is not limited thereto, but only by the claims. Any drawings described are only schematic and are non-limiting. In the drawings, the size of some of the elements may be exaggerated and not drawn to scale for illustrative purposes. The dimensions and the relative dimensions in the drawings do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than those described and/or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein may operate in other orientations than described or illustrated herein.

The term "comprising", as used in the claims, should not be considered as being limited to the elements that are listed in context with it. It does not exclude that there are other elements or steps. It should be considered as the presence provided of these features, integers, steps or components as required, but does not preclude the presence or addition of one or more other features, integers, steps or components, or groups thereof. Thus, the volume of "an article comprising means A and B" may not be limited to an object which is composed solely of agents A and B. It means that A and B are the only elements of interest to the subject matter in connection with the present invention. In accordance with this, the terms "comprise" or "embed" enclose also the more restrictive terms "consisting essentially of" and "consist of". By replacing "comprise" or "include" with "consist of" these terms therefore represent the basis of preferred but narrowed embodiments, which are also provided as part of the content of this document with regard to the present invention.

Unless specified otherwise, all values provided herein include up to and including the endpoints given, and the values of the constituents or components of the compositions are expressed in weight percent or % by weight of each ingredient in the composition.

As used herein, "weight percent," "%wt," "wt-%," "percent by weight," "% by weight,", "ppm wt", "ppmwt", "ppm by weight", "weight ppm" or "ppm" and variations thereof refer to the concentration of a substance as the weight of that substance divided by the total weight of the composition and multiplied by 100 or one million, as appropriate, unless specified differently. It is understood that, as used here, "percent", "%," are intended to be synonymous with "weight percent", "%wt," etc.

It should be noted that, as used in this specification and the appended claims, the singular forms "a," "an," and "the" include plural referents unless the content clearly dictates otherwise. Thus, for example, reference to a composition containing "a compound" includes a composition having two or more compounds. It should also be noted that the term "or" is generally employed in its sense including "and/or" unless the content clearly dictates otherwise.

Additionally, each compound used herein may be discussed interchangeably with respect to its chemical formula, chemical name, abbreviation, etc..

Most of the metal streams in the process according to the present invention contain a major portion of lead, often in combination with a significant amount of tin. Such streams have a relatively low melting point and have been used, already for centuries, for attaching one solid to another solid, by a process which was often called "soldering". Such streams are therefore often addressed as being so-called "solder" streams or "solders", and this term has also been used in this document to address such streams.

From the target metals which the present invention is recovering, Sn and Pb are considered "the solder metals". These metals distinguish themselves from other metals, in particular copper and nickel, because mixtures containing major amounts of these metals usually have a much lower melting point than mixtures containing major amounts of copper and/or nickel. Such compositions have been used already millennia ago for creating a permanent bond between two metal pieces, and this by first melting the "solder", bringing it in place, and letting it solidify. The solder therefore needed to have a lower melting temperature than the metal of the pieces it was connecting. In the context of the present invention, a solder product or a solder metal composition, two terms which are used interchangeably throughout this document, mean metal compositions in which the combination of the solder metals, thus the level of Pb plus Sn, represents the major portion of the composition, i.e. at least 50%wt and preferably at least 65%wt. The solder product may further contain minor levels of the other target metals copper and/or nickel, and of non-target metals, such as Sb, As, Bi, Zn, Al and/or Fe, and/or elements such as Si.

In this document and unless specified differently, amounts of metals and oxides are expressed in accordance with the typical practice in pyrometallurgy. The presence of each metal is typically expressed in its total presence, regardless whether the metal is present in its elemental form (oxidation state = 0) or in any chemically bound form, typically in an oxidized form (oxidation state > 0). For the metals which may relatively easily be reduced to their elemental forms, and which may occur as molten metal in the pyrometallurgical process, it is fairly common to express their presence in terms of their elemental metal form, even when the composition of a slag or dross is given, wherein the majority of such metals may actually be present in an oxidized and/or chemically bound form. It is therefore that the composition of the metal mixture as feed to step (a) specifies the content of Fe, Zn, Pb, Cu, Sb, Bi as elemental metals. Less noble metals are more difficult to reduce under non-ferrous pyrometallurgical conditions and occur mostly in an oxidized form. These metals typically are expressed in terms of their most common oxide form. Therefore slag or dross compositions are typically giving the content of Si, Ca, Al, Na respectively expressed as SiO₂, CaO, Al₂O₃, Na₂O.

In soft lead refining step (b), the impure Pb feed is contacted preferably with a combination of NaOH and NaNO₃. The chemistry which is intended with these chemicals may be represented by the following reactions:

5 Pb + 6 NaOH + 4 NaNO₃ -> 5 Na₂PbO₃ + 2 N₂ + 3 H₂O (I)

5 Na₂PbO₃ + 4 As + 2 NaOH -> 4 Na₃AsO₄ + 5 Pb + H₂O (II)

Na₂PbO₃ + Sn -> Na₂SnO₃ + Pb (III)

5 Na₂PbO₃ + 3 H₂O + 4 Sb -> 4 NaSbO₃ + 6 NaOH + 5 Pb (IV)

The key to this chemistry is the enabling of the generation of the intermediate sodium plumbate (Na₂PbO₃) by reaction (I). This intermediate plumbate is able to react with the impurities As, Sn and Sb according to the respective reactions (II) to (IV) and captures these each time in the respective sodium metalate compound while setting the Pb free again. The formed sodium metalate compounds are respectively sodium arsenate, sodium stannate and sodium antimonate.

The respective sodium metalate compounds collect in a supernatant phase, typically called the "dross" or sometimes also "slag". These terms are often used interchangeably, though the term "slag" is typically used for a liquid phase, while "dross" is typically meaning a phase with a less fluid, more solid consistency. The term "slag" is more typically used in the context of producing high melting point non-ferrous metals, such as copper, and is therefore usually a fluid, often comprising primarily metal oxides. The term "dross" is used more frequently in the context of lower melting point non-ferrous metals, such as Sn, Pb, Zn, Al, and which are often in a solid or dusty form. The delineation between these two terms regarding consistency is however not always clear.

The dross of soft lead refining step (b) may be skimmed off, and may further be processed for the recovery of at least some of its constituents.

In an embodiment of the process according to the present invention, the soft lead refining step (b) is performed at a temperature of at most 550°C, preferably at most 500°C, more preferably at most 450°C and optionally at least 370°C, preferably at least 390°C, more preferably at least 400°C. Compliance with the upper temperature limit as specified brings the advantage that the feed stream, because this stream becomes typically available from the first distillation step (a) at a temperature of about 960-970°C, is cooled down. This cooling brings the advantage that any copper that may have ended up in the overhead condensate of the first distillation step (a) may come out of solution and comes floating on top, such that it may be removed by skimming, optionally together with skimming of the third supernatant dross. Performing this step at a temperature in compliance with the lower limit brings the advantage of faster reaction kinetics. Any further copper that may have remained after this cooling and skimming, may be removed by adding sulphur to form a CuS containing dross, and also skim that CuS containing dross from the liquid metal.

In an embodiment of the process according to the present invention, the applicant prefer to use a strong oxidant as the first oxidant of soft lead refining step (b). Preferably the first oxidant in soft lead refining step (b) is selected from NaNOs, Pb(NO₃)₂, KNOs, ozone, nitric acid, sodium and potassium manganate, sodium and potassium (per)manganate, chromic acid, calcium carbonate (CaCOs), sodium and potassium dichromate, preferably NaNOs, CaCOs, Pb(NO₃)₂ or KNOs, more preferably NaNOs. The applicants prefer to use an oxidant that is stronger than air containing 21%vol of oxygen. The applicants have found that the selection of a sufficiently strong oxidant, such as the elements in the proposed list, brings the advantage that the desired chemistry is running faster. The higher reaction kinetics bring the advantage that a shorter residence time is necessary for obtaining a desired conversion, such that a smaller reaction vessel may be used, or a given reaction vessel is able to handle a larger throughput.

In the process according to the invention, because of the nature of first distillation step (a) there is always a trace of tin present in the lead concentrate to be treated in soft lead refining step (b), and there is usually also at least one of the other contaminants present, such as arsenic, antimony or zinc. In particular a small amount of antimony is most typically also present when the process is based on secondary raw materials. The process according to the invention is not targeting a selective removal of the contaminants in case there is more than one present. The process targets the simultaneous removal of all the contaminants together that are able to participate in the reaction chemistry. Only one third supernatant dross is formed in soft lead refining step (b), removed as one single by-product from the process, and made available for recycling, preferably in a pyrometallurgical process step somewhere upstream of first distillation step (a). This target brings the advantage that a strong oxidant is allowable which does not need to show or be made selective to a specific element of the group Zn, As, Sn and Sb.

In an embodiment of the process according to the present invention, the applicants prefer to use a strong base as the first base of soft lead refining step (b). Preferably, the first base in soft lead refining step (b) is selected from NaOH, Ca(OH)₂ and Na₂CO₃ and combinations thereof, preferably NaOH. The applicants have found that the use of a strong base contributes to fast reaction kinetics and hence to smaller reaction equipment and thus to a lower investment cost. Because the process does not need a selective removal of any one of the target contaminants, the first base does not need to show or be made selective to a specific element of the group Zn, As, Sn and Sb. The applicants prefer a (hydr)oxide as the first base, because it avoids extra by-products such as CO₂. Carbon dioxide formation leads to foaming on the bath and the generation of a dross which is much higher in volume and which may run over the side and represent a safety hazard. The applicants prefer to use NaOH because it generates no carbon dioxide like sodium carbonate and because of its more abundant availability. The applicants prefer to use solid sodium hydroxide in soft lead refining step b) because this facilitates the phase separation between the skimmings and the molten lead stream. Sand may be added in order to stiffen the dross and facilitates its removal. The applicants have found that NaOH as the first base brings the benefit of promoting the agglomeration of the floating skimmings, which facilitates the selective removal of the third supernatant dross.

In an embodiment of the process according to the present invention, in addition to NaOH and NaNOs also an amount of Ca(OH)₂ is added as reagent into soft lead refining step (b). The applicants have found that this improves the physical characteristics of the dross, because this become "drier" and less adhesive to the equipment. A "drier" dross is a dross containing less liquid, the latter being entrained molten lead from the underlying liquid phase. A "drier" dross therefore brings the advantage of an improved separation between lead and dross, and of less (metallic) lead being removed with the third supernatant dross and needing to be recovered.

In an embodiment of the process according to the present invention, the weight ratio of the first base relative to the first oxidant used in soft lead refining step (b) is in the range of 1.5:1.0 to 4.0:1.0, preferably in the range of 2:1 to 3:1 when respectively NaOH is used as the first base and NaNOs is used as the first oxidant, and recalculated according to stoichiometry for when other compounds are being used as first base and/or first oxidant. Alternatively, the applicants prefer to apply a molar ratio of the first base over the first oxidant in the range of 3.18-8.5, preferably 4.25-6.38. The applicants have found that respecting this range as prescribed for the ratio of first base to first oxidant brings the advantage that the viscosity of the third supernatant dross is sufficiently high but that this dross does not become excessively hard.

In an embodiment of the process according to the present invention, the weight ratio of the first base relative to the first oxidant used in soft lead refining step (b) is at most 2.90, preferably at most 2.80, more preferably at most 2.70, even more preferably at most 2.60, preferably at most 2.50, more preferably at most 2.40, even more preferably at most 2.30, preferably at most 2.25, more preferably at most 2.20, even more preferably at most 2.15, preferably at most 2.10, more preferably at most 2.05, even more preferably at most 2.00. These limits apply to NaOH as the first base and NaNOs as the first oxidant, and may be converted according to stoichiometry in case one or more other compounds are being used. The limits may also be converted to a molar ratio using the factor *85/40. The applicants prefer to keep the amount of first base, and in particular the amount of NaOH, limited in view of the recycle of the third supernatant dross to an upstream metallurgical process step and because the NaOH or other strong base is corrosive to the refractory lining of the equipment of that step. Less NaOH or other base may therefore lead to less wear and tear on the refractory lining of the equipment where the third supernatant dross is recycled to.

In an embodiment of the process according to the present invention, in the first bottom residue or product of first distillation step (a) is remaining at least 0.10%wt of lead, preferably at least 0.20%wt, more preferably at least 0.30%wt, even more preferably at least 0.50%wt, preferably at least 0.60%wt, more preferably at least 0.70%wt, even more preferably at least 0.80%wt, preferably at least 0.90%wt, preferably at least 1.00%wt, more preferably at least 1.5%wt, even more preferably at least 2.0%wt, preferably at least 3.0%wt, more preferably at least 4.0%wt, even more preferably at least 5.0%wt, and yet more preferably at least 6.0%wt of lead. The applicants have found that keeping the prescribed minimum amount of lead in the first bottom residue or product of first distillation step (a) brings the advantage that less of the tin, arsenic and antimony in the feed to step (a) ends up in the first concentrated lead stream as overhead condensate that is treated in soft lead refining step (b). This brings the advantage that the chemicals and energy requirements in step (b) per unit weight of soft lead processed in step (b) are reduced relative to a process in the art that does not comply with the requirements of the process according to the present invention.

The applicants believe that higher contents of Pb remaining in the Sn product of the first distillation step (a) may act as an extra solvent, for instance for the amount of antimony, which may be present in the feed to the first distillation step. This solvency effect may be to the benefit of the separation in the first distillation step (a). An important target of the first distillation step (a) as part of the process according to the present invention is to evaporate lead (Pb) and to produce a lead-containing overhead product which is suitable for being cleaned up further by conventional means to produce a product of high purity lead, so-called "soft lead". The applicants believe that leaving an amount of lead in the first bottom product of the first distillation step (a) helps in achieving that goal, by providing a liquid phase which remains attractive for many of the metals other than lead, and hence reducing the desire of these metals to become volatile as well as their tendency to escape from the liquid phase and to end up in the overhead product of the first distillation step (a). The applicants believe that this benefit is enhanced by leaving a higher concentration of lead in the first bottom product of the first distillation step (a). The applicants believe this benefit to be particularly important for any antimony which is present in the feed to the first distillation step (a) of the process according to the present invention.

The applicants have further found that the problems of the formation of intermetallic compounds in first distillation step (a), as described elsewhere in this document, are further alleviated by leaving a more important presence of lead in the first bottom product of the first distillation step (a). The applicants believe that the higher amount of lead remaining in the liquid phase in the distillation equipment has a beneficial impact on keeping the potentially harmful metals better in solution and on reducing their tendency for forming the potentially disturbing intermetallic compounds during the first distillation step (a). Without being bound by theory, the applicants believe that this effect may be based on dilution, but the applicants suspect that there may be additional factors playing a role in reducing the risk for formation of intermetallic compounds under the conditions occurring in the first distillation step (a).

In an embodiment, the first bottom product obtained in the first distillation step (a) by the removal of lead comprises at most 10.0%wt of lead, preferably at most 9.0%wt of lead, more preferably at most 8.0%wt, even more preferably at most 7.0%wt, preferably at most 6.5%wt, more preferably at most 6.0%wt, even more preferably at most 5.0%wt and yet more preferably at most 4.0%wt of lead. The applicants have found that not exceeding this prescribed level of lead in the first bottom product of the first distillation step (a) brings the advantage downstream of facilitating the further separation of the different metals present in the first bottom product to obtain a tin prime product which meets most of the international industry standards for high quality tin grade. The applicants have further found that controlling the lead content in between the prescribed limits provides a practical and economical balance between on the one hand the benefits obtained by the presence of lead in the liquid all through the first distillation step (a) and on the other hand the downstream task of upgrading the first bottom product of the first distillation step (a) into at least a high value tin prime product in combination with one or more by-products containing the other metals present in the first bottom product which by-products are suitable for further processing and readily upgrading them into high value by-product streams. The applicants have further found that a limited presence of lead in the first bottom product is beneficial if there are also precious metals present and these precious metals should be recovered downstream from the first distillation step (a) from its first bottom stream or product. This recovery may for instance be performed in a crystalliser, such as described in CN102534249 for removing silver from a high silver containing crude tin product, and which may thus separate a first tin-enriched product from a first silver-enriched liquid drain product in which the precious metals concentrate together with most of the lead present, but with inevitably some of the more valuable tin remaining. The applicants have found that the limiting of the amount of lead remaining in the first bottom product from the first distillation step (a) reduces the amount of first silver-enriched liquid drain product in such a crystalliser and leads to a first silver-enriched liquid drain product which is more concentrated in the desired precious metals, and hence more interesting for further processing for recovering the precious metals. A further benefit is that less of the valuable tin is lost in the first silver-enriched liquid drain product and remains available in the stream leading to the tin prime product.

Keeping the prescribed amount of Pb, together with the higher amount of Sb which is present as a consequence thereof, in the Sn-rich first bottom product or residue of first distillation step (a), provides a stream which is suitable for the downstream combined production of a pure Sn product together with a hard lead stream (mainly Pb, with significant amounts of Sb), e.g. by distilling a mixture of Pb and Sb as the overhead product away from a high purity Sn bottom product in a second distillation step. When this second (Pb/Sb) overhead product needs to be further purified, again a "Harris"-type process may be applied, but this second "Harris"-type process step, in the production of hard lead, may then focus solely on the removal of the remaining traces of Sn and/or As, and not the Sb, because a significant level of Sb may be allowed in the final hard lead product. In the "Harris"-type process, the Sb is the more difficult to remove, Sn being easier to oxidise. The present invention therefore results in an overall reduction of chemicals consumption also in this setup where a "hard lead" is co-produced with pure Pb and pure Sn as the other prime products. An additional benefit of the present invention is that it provides an outlet for any Sb present in the solder stream, preferably an outlet in which the Sb may bring performance benefits, and hence also extra economic value.

Keeping the prescribed amount of Pb in the Sn-rich first bottom residue or product of first distillation step (a) brings the further advantage, when silver or other precious metals (PMs), including platinum group metals (PGMs) are present in the feed to first distillation step (a), that more of the silver and other PMs remain with the first bottom residue or product of first distillation step (a) and less end up in the first concentrated lead stream as overhead. Techniques are known to recover silver and/or PMs from a lead concentrate, such as the so-called "Parkes" process using the addition of zinc, but these are complex and expensive, they generate by-products containing the removed metals in chemically bound form. These techniques require further processing steps, and they are only justified if sufficient levels of these metals are present. Silver or PMs in the first concentrated lead stream to soft lead refining step (b) are thus difficult to recover, and small amounts thereof typically end up as a trace component in the soft lead product where they do not bring economic value. Silver or PMs in the first bottom residue or product of first distillation step (a) may more readily be recovered and upgraded, for instance in the way this is described elsewhere in this document and in the example. The applicants have further found that the presence of the prescribed amount of lead in the silver and/or PM recovery step downstream on the first bottom residue or product of first distillation step (a) brings a number of significant advantages in terms of the operation of that recovery step and in terms of the by-product that may be obtained from that step, which also improves the ease of processing that by-product further.

In an embodiment of the process according to the present invention, the first concentrated lead stream entering soft lead refining step (b) comprises at least 0.0400%wt and at most 0.3000%wt of tin. The applicants prefer to have in this stream at least 0.0500%wt of tin, preferably at least 0.0700%wt, more preferably at least 0.0800%wt, even more preferably at least 0.0900%wt, yet more preferably at least 0.100%wt of tin. Optionally the applicants prefer to have at most 0.2500%wt of tin in this stream, preferably at most 0.2250%wt, more preferably at most 0.2000%wt, even more preferably at most 0.1500%wt of tin. The applicants have found that having the prescribed amount of tin in the overhead of first distillation step (a) represents an advantageous balance between the amount of Sn that needs to be removed in step (b) and the amounts of Sb that finds its way into soft lead refining step (b) and needs to be removed in soft lead refining step (b) in order to obtain a high quality soft lead. Sn is in soft lead refining step (b) easier to remove than Sb because it more readily engages in its reaction (III or IV) to form the corresponding sodium metalate.

In an embodiment of the process according to the present invention, the third supernatant dross from soft lead refining step (b) contains less than 1.0%wt of chlorine, preferably the third supernatant dross having a chlorine content of at most 0.75%wt, more preferably at most 0.50%wt, even more preferably at most 0.25%wt, preferably at most 0.20%wt or 2000 ppm wt, preferably at most 900 ppm wt, more preferably at most 800 ppm wt, even more preferably at most 700 ppm wt, preferably at most 600 ppm wt, more preferably at most 500 ppm wt, even more preferably at most 400 ppm wt, preferably at most 300 ppm wt, more preferably at most 200 ppm wt, even more preferably at most 100 ppm wt. Preferably this upper limit applies to all halogens in total. The applicants have found that soft lead refining step (b) as part of the present invention may be operated without the addition of NaCl as described in GB 189013, US 1573830 and US 1674642. The applicants have found that the recovery of the metal values from the third supernatant dross from soft lead refining step (b) is possible via other process paths than those described in this art, with steps that do not need the sodium chloride for enabling or improving their functioning. The applicants prefer to introduce the third supernatant dross from soft lead refining step (b) into a pyrometallurgical process step, in which - on the contrary - the presence of sodium chloride and/or other halogen-containing compounds is preferably low and more preferably substantially absent. The applicants have found that in a pyrometallurgical process step, chlorine may form metal chlorides of various valuable metals and that many of these chlorides are rather volatile under the operating conditions of such a process step.

The chlorides, as other halogens, escape with the exhaust gas from the furnace, condense in the exhaust gas treatment system on coolers, filters, and the like, typically forming a rather sticky and difficult to handle solid. Where there is also arsenic present, such as in most of the typical lead recovery processes, chlorine presence further creates the risk for the formation of the very toxic gas AsCl₃. These problems and/or risks are thus avoided with the process according to the present invention.

In an embodiment of the process according to the present invention, the third supernatant dross from soft lead refining step (b) is recycled to a process step upstream of first distillation step (a), preferably to a pyrometallurgical process step. The applicants have found that the at least one contaminant removed by soft lead refining step (b) and ending up as its sodium metalate oxysalt, may e.g. readily be reduced to its elemental metal form in a pyrometallurgical process step. The applicants have found that the at least one contaminant, when recycled to a process step upstream of first distillation step (a), may readily show up again in the feed to first distillation step (a), but, thanks to the inclusion of first distillation step (a) as part of the process according to the present invention, most of this extra presence of the at least one contaminant ends up in the first bottom residue or product of first distillation step (a), and therefore does not lead to extra consumption of chemicals and energy in soft lead refining step (b). The tin in the third supernatant dross from soft lead refining step (b) and returning to first distillation step (a) becomes readily recoverable if a high purity tin prime product is obtained from the first bottom residue or product of first distillation step (a). It is explained elsewhere in this document that also the antimony ending up in the first bottom residue or product of first distillation step (a) may be upgraded to become (part of) an end product of commercial value. The applicants have found that also small amounts of arsenic may be made of commercial value, e.g. as a minor acceptable impurity in a prime product such as hard lead.

In an embodiment of the process according to the present invention, the first base and the first oxidant are mixed with each other before introducing them into soft lead refining step (b). This brings the advantage of a simplified and easier addition of the chemicals into soft lead refining step (b), as compared to the methods of contact and/or addition described in the art. The applicants have found that soft lead refining step (b) may readily be performed in one single operation. In particular when the third supernatant dross is intended for recycle to a pyrometallurgical process step, the applicants have found that the recovered contaminant together with the lead present in any leftover sodium plumbate from reaction (I) that has not reacted away by any of reactions (II) to (IV) and with any lead that is physically entrained with the third supernatant dross after its separation from the purified lead product from soft lead refining step (b), may readily be processed and recovered together. The process according to the present invention is also less sensitive than the processes in the art to a limited presence of lead, entrained or as its oxysalt, in the dross. Such extra lead recycle represents only a limited process inefficiency, provided the amounts remain reasonable.

In an embodiment of the process according to the present invention, the first distillation step (a) is performed at a pressure of at most 15 Pa absolute, preferably at most 10 Pa, more preferably at most 5 Pa, even more preferably at most 1 Pa, yet more preferably at most 0.7 Pa absolute. The applicants have found that a lower pressure is beneficial because it facilitates the separation of the more volatile metals from the less volatile metals. The further advantage is that the separation may be performed at a lower temperature as compared to when using a higher operating pressure. This brings the benefit that the operation is also energetically more efficient..

In an embodiment of the process according to the present invention, the first distillation step (a) is performed at a temperature of at least 800°C, preferably at least 850°C, more preferably at least 900°C, even more preferably at least 930°C. The applicants have found that a higher temperature promotes the separation of the metals into a vapour and a residual liquid phase, for instance because the higher temperature increases the volatility of the more volatile metal or metals. The higher temperature may also increase the difference in volatilities between the metal or metals to be vaporized and the metal or metals to be kept in the liquid phase. The applicants have further found that a higher temperature also reduces the risk that intermetallic compounds may form and/or adhere to the equipment walls, and thus possibly impair the distillation operations.

The first distillation of the solder-type metal mixture in step (a) may be performed batch-wise, and such batch vacuum distillation techniques have been disclosed in CN101696475, CN104141152, CN101570826, and in Yang et al, "Recycling of metals from waste Sn-based alloys by vacuum separation", Transactions of Nonferrous Metals Society of China, 25 (2015), 1315-1324, Elsevier Science Press.

In an embodiment of the process according to the present invention, the first distillation step (a) is performed in continuous operating mode. The distillation under vacuum of metals, such as in step (a), may also be performed in continuous mode, and such continuous distillation techniques have been disclosed in WO 2018/060202 A1, CN102352443, CN104651626 and CN104593614.

In an embodiment of the process according to the present invention, the feed for the first distillation step (a) is a crude solder composition containing substantial portions of tin and lead and comprising at least 0.16%wt and optionally at most 10%wt of the total of chromium (Cr), manganese (Mn), vanadium (V), titanium (Ti), tungsten (W), copper (Cu), nickel (Ni), iron (Fe), aluminium (Al) and/or zinc (Zn), the feed being available at a temperature of at least 500°C, the process further comprising the step of pretreating the crude solder composition before first distillation step (a) to form the molten solder mixture as feed for the first distillation step (a), the pre-treatment step comprising the steps of
c) cooling the feed crude solder composition down to a temperature of at most 825°C, to produce a bath containing a first supernatant dross which by gravity becomes floating upon a first liquid molten metal phase,
d) adding a chemical selected from an alkali metal, an earth alkali metal, a chemical compound comprising an alkali metal and a chemical compound comprising an earth alkali metal, to the first liquid molten metal phase to form a bath containing a second supernatant dross which by gravity comes floating on top of a second liquid molten metal phase, and
e) removing the second supernatant dross from the second liquid molten metal phase to obtain the molten solder mixture.

The inventors have found that particular metals in the feed crude solder composition are capable, under the conditions of the first distillation step (a) which are suitable to evaporate lead from a mixture comprising tin, of forming mutual intermetallic compounds between at least two of these particular metals and/or intermetallic compounds of at least one of the particular metals with tin. The inventors have further found that many of these intermetallic compounds have a much higher melting point than the temperature of the mixture in which they are formed. The inventors have therefore found that these high melting point intermetallic compounds may come out of solution and form solids. These solids may remain suspended in the liquid metal and risk to reduce the fluidity of the mixture, such as by raising the viscosity of the liquid mixture. This by itself may hinder a smooth operation of the first distillation equipment, such as by slowing down the flow of liquid metals reducing the equipment capacity and thus force the equipment to be operated at reduced throughput. The solids may also adhere and/or attach to the first distillation equipment, and thereby create a risk for impairing or even obstructing the operation of the first distillation equipment, e.g. by clogging up important passages for the process streams. The described phenomenon may even force a shutdown to open and either clean the equipment or replace the affected equipment items.

The inventors have found that the tendency to form such intermetallic compounds increases at a given temperature when the lead content in the liquid metal mixture is reduced. The inventors have found that the risk for the formation of intermetallic compounds therefore increases as the molten feed mixture makes its way from the inlet of the first distillation equipment towards the outlet of the first bottom product, because of the evaporation of lead from the liquid mixture flowing through the first distillation equipment.

The inventors have further found that the tendency to form such intermetallic compounds increases with a reduction of the temperature of the molten liquid metal phase. The inventors have for instance observed that the feed entering the first distillation apparatus may have a lower temperature than the first bottom product that is leaving the first distillation equipment. The inventors have thus found that the disadvantageous effects of the intermetallic compounds may be more pronounced at lower temperatures. The applicants believe that therefore the inlet section of the first distillation equipment may be particularly prone for the problems described above which are caused by the intermetallic compounds.

The inventors have further found that a continuous distillation of lead from tin is even more prone for the problem which is addressed by the present invention. The inventors believe that this is at least partially because a continuous distillation operation provides more time for a gradual build-up of solids which come out of solution and may adhere to the equipment. In a continuous operation, the solids may therefore accumulate and create bigger problems than what may be found in batch operations. In addition, the liquid metal stream in continuous vacuum distillation equipment typically follows a complex pathway having narrow passages. The pathway and these narrow passages are more prone for being obstructed by the intermetallic compounds coming out of solution and seeking attachment to a solid anchoring point.

The inventors have found that in particular chromium (Cr), manganese (Mn), vanadium (V), titanium (Ti), tungsten (W), copper (Cu), nickel (Ni), iron (Fe), zinc (Zn) and aluminium (Al), are metals of which the presence in the solder feed to the first distillation step (a) may lead to the disturbing intermetallic compounds during the first distillation of the solder. Of these potentially disturbing metals, it are Cu, Ni, Fe, Zn and Al which are typically more important for being controlled. The reason for this is that it is more advantageous to recover tin and/or lead from feedstocks that contain Cu, Ni, Fe, Zn and Al. Iron and/or aluminium may also be introduced for process reasons into the overall process upstream of the tin and/or lead recovery step. The presence of Cu, Ni, Fe, Zn and Al in the crude solder intermediate product from which one wants to recover the tin and/or lead is therefore more likely and is the result of choices in the upstream process steps and of the selection of the feedstock materials for the upstream process steps, typically of a pyrometallurgical nature.

In an embodiment, the crude solder composition which is pre-treated before being fed to first distillation step (a) comprises at least 0.5%wt, more preferably at least 0.75%wt, even more preferably at least 1.0%wt, preferably at least 1.5%wt, more preferably at least 2.0%wt, even more preferably at least 2.5%wt, yet more preferably at least 3.0%wt of the total of chromium (Cr), manganese (Mn), vanadium (V), titanium (Ti), tungsten (W), copper (Cu), nickel (Ni), iron (Fe), aluminium (Al) and/or zinc (Zn) together. The applicants have found that a crude solder composition containing these compounds at the levels as specified may readily be successfully pre-treated such that the downstream first distillation is able to operate unaffected by the formation of intermetallic compounds for an extended period of time. This brings the advantage of the capability to process a crude solder composition which may be obtained by the pyrometallurgical processing of a wide variety of raw materials and with the use of a wide variety of metal containing auxiliary materials in those upstream process steps. Particularly advantageous is the capability to process a crude solder which is obtained as the by-product from a copper smelting and refining operations which is fed with secondary raw materials. These secondary raw materials may come from a wide variety of origins, and thus contain a wide variety of other compounds, in particular other metals than lead and/or tin. A further advantage is that also the copper content of the crude solder composition intended as feed for the first vacuum distillation does not need to be reduced to very low levels, which reduces the quality pressure on the performances of the upstream process steps, and hence allows these process steps more freedom and thereby a higher efficiency and/or capacity within the same equipment limitations. The applicants have found that the pre-treatment steps c), d) and/or e) that may be added to the process according to the present invention are readily able to cope with the significant levels of the undesired components as specified. In addition, the specified levels of these components do not necessarily lead to a higher consumption of process chemicals, and to bigger problems in any pyrometallurgical step for the recovery of the metal values from the third supernatant dross which is removed in soft lead refining step b), because most of the undesired components may already be removable or even be removed by the specified physical means, such as step e).

In an embodiment, the crude solder composition which is pre-treated prior to first distillation step (a) comprises at most 10.0%wt, preferably at most 8.0%wt, more preferably at most 6.0%wt, even more preferably at most 5.0%wt, preferably at most 4.0%wt, more preferably at most 3.0%wt, even more preferably at most 2.0%wt, of the total of chromium (Cr), manganese (Mn), vanadium (V), titanium (Ti), tungsten (W), copper (Cu), nickel (Ni), iron (Fe), aluminium (Al) and/or zinc (Zn) together. The applicants have found that respecting the upper limit as prescribed allows the pre-treatment steps c), d) and e) that may be added to the process to perform more effectively in achieving the desired results, and this in a more efficient way because the requirements in terms of energy and chemicals remains limited, practical and economical. A further advantage of a limited presence of the specified components is that the amount of first and/or second supernatant dross produced remains limited. Any removed dross inevitably entrains some valuable metals. The obtained dross thus also represents a loss of valuable metals from the main process streams intended for recovering the desired metals, in the present context primarily tin and/or lead but possibly including other metals such as antimony and precious metals. Even if the first and/or second supernatant dross is recycled to an upstream process step, the amount of desired metals being recycled with the dross represents a process inefficiency. The reduction of this process loss and/or inefficiency by the limits specified above is therefore an overall process advantage. A further advantage of this feature is also that there will be less lead that is circulating in the overall process in which the crude solder composition is produced and pre-treated. The processing of lead-containing metal streams at high temperatures represents its own issues of industrial hygiene. The specified feature therefore also contributes to a lower and/or more contained industrial hygiene problem associated with the recovery of tin and/or lead as a by-product from the production of copper or other non-ferrous metals.

In an embodiment, the crude solder composition which is pre-treated prior to first distillation step (a) is available at a temperature of at least 510°C, preferably at least 520°C, more preferably at least 550°C, even more preferably at least 575°C, preferably at least 600°C, more preferably at least 650°C, even more preferably at least 700°C, preferably at least 750°C, more preferably at least 775°C, even more preferably at least 800°C, yet more preferably at least 830°C. The applicants have found that a higher feed temperature contributes to a more fluid feed stream in the upstream process where the feed stream is prepared. The applicants have also found, at a higher temperature, that the intermetallic compounds forming between copper and tin, and which thus shall need to be removed to a certain extent, that these intermetallic compounds are then prone to capture less tin for the same amount of copper. A higher temperature thus contributes to a more efficient removal of copper contamination, because the removed intermetallic compounds are then entraining less of the valuable tin away from the molten solder composition which is continuing its path towards the prime products. The applicants have further found that a higher feed temperature of the crude solder composition allows the pre-treatment steps to be more effective and efficient. The applicants have for instance found that a higher feed temperature provides more room for cooling, and that a wider reaching cooling trajectory is more effective in the removal of the target metal compounds, i.e. these which are capable of forming intermetallic compounds downstream in the first distillation, in particular in the removal of copper.

In an embodiment, the crude solder composition which is pre-treated prior to first distillation step (a) is available at a temperature of at most 1000°C, preferably at most 980°C, more preferably at most 960°C. The applicants have found that limiting the feed temperature to below the specified limits brings the advantage that the energy requirement of upstream process steps remains practical, sufficiently efficient and economical. Higher temperatures, above the specified limits, have not been found to bring sufficient extra benefits in order to justify the extra energy input, in whatever form this energy input occurs, including chemical energy.

In an embodiment, the crude solder composition which is pre-treated prior to first distillation step (a) is cooled down to a temperature of at most 820°C, preferably at most 800°C, more preferably at most 750°C, even more preferably at most 700°C, yet more preferably at most 650°C, preferably at most 600°C, even more preferably at most 550°C, preferably at most 525°C, more preferably at most 500°C, even more preferably at most 450°C, preferably at most 400°C, more preferably at most 370°C, even more preferably at most 360°C, preferably at most 350°C, more preferably at most 345°C, even more preferably at most 330°C, preferably at most 320°C, more preferably at most 310°C to produce a bath containing the first supernatant dross which by gravity becomes floating upon the first liquid molten metal phase. The applicants have found that the cooling of the crude solder composition removes at least a part of several of the less desired metals, in particular of copper but also of nickel, iron, zinc and aluminium, and of chromium, manganese, vanadium, titanium and tungsten, if any of these is present. The applicants have further found that when the cooling trajectory is wider and/or reaches further down in temperature, that more of these metals come out of solution and end up in the first supernatant dross. The wider the cooling trajectory is made, the more prone the cooling step becomes for being split into different successive cooling steps, preferably combined with intermediate dross removal. This brings the advantage that overall less first supernatant dross may need to be removed for removing the same amount of undesired metals, and that the total amount of first supernatant dross contains less of the target metals of the overall process, which are primarily lead and/or tin, but include also the various precious metals that may be present in the crude solder composition and under particular circumstances also the antimony (Sb) which may be present. The applicants have also found that the cooler the crude solder composition, the higher its density, which is beneficial for the separation by gravity of the first supernatant dross, because the first supernatant dross comes more readily floating on top of the denser liquid metal phase.

In an embodiment, the crude solder composition which is pre-treated prior to first distillation step (a) is cooled down to a temperature of at least 230°C, preferably at least 232°C, more preferably at least 240°C, even more preferably at least 250°C, more preferably at least 270°C, even more preferably at least 280°C, preferably at least 290°C, more preferably at least 300°C, even more preferably at least 310°C, preferably at least 320°C, more preferably at least 325°C, even more preferably at least 328°C. The applicants have found, thanks to this lower limit of the cooling step, that there is less tin consumed in binding the same amount of copper that needs to be removed. Without wanting to be bound to this theory, the applicants believe that this is due to the formation of Cu₆Sn₅ becoming more favoured and the formation of CusSn becoming less favoured at the lower temperatures. The lower limit of the cooling step therefore reduces the amount of valuable tin that needs to be removed together with the same amount of copper in the first supernatant dross. Even if the first supernatant dross is optionally recycled upstream in the process, this feature represents an efficiency improvement because less tin needs to be recycled in that process for the same amount of copper that is removed by the cooling step c).

In the cooling step, the applicants have further found that it is preferable to respect the minimum temperature as specified, because this assures that the metal remains liquid and that its viscosity remains sufficiently low in order to allow for the solids being formed, by the cooling and/or by the chemical reactions that are triggered by the addition of chemical compounds, to be able to raise to the surface and to be removed from the underlying liquid metal phase by skimming.

The prime purpose of adding the prescribed chemical in step (d) is the removal of a major portion of any zinc which may be present in the crude solder stream that is processed steps (c) and (d).

The inventors have found that the identified problems in the context of first distillation step (a) may significantly be alleviated and even may be avoided by controlling within particular levels the concentration of these metals in the molten solder mixture as feed to the first distillation step (a) wherein the solder mixture is separated into more concentrated streams by evaporation of at least part of the lead.

The applicants point out that the upstream process which produces the crude solder composition suitable as feed stream for first distillation step (a) is typically operated at a high temperature, typically much higher than the specified 500°C, rather in the range of 700-1000°C. The applicants point further out that step (a), which is most typically a vacuum distillation step, typically should be operated at an even higher temperature. The typical temperatures for removing lead from tin by vacuum distillation are at least 900°C, often as high as 1100°C. The applicants therefore submit that step (c) is counter-intuitive. The applicants submit that the one of ordinary skill in the art would prefer to keep the crude solder at the high temperature at which it was produced, possibly even heating it further, before it is submitted to the first distillation step (a) for separating lead from tin.

The applicants have however found that the cooling step (c) is able to move, without the intervention of any further chemicals, a significant part of the components in the mixture which are undesired in the feed for first distillation step (a) to a first supernatant dross phase, this first supernatant dross phase thus becoming available for being separated from the liquid metal phase. The applicants have found that this cooling step is a significant contributor in creating a separate dross phase rich in the undesired components, leaving a liquid metal phase which contains less of these undesired components and which is therefore more suitable as feed for the first distillation step (a) encountering less operational problems caused by the possible formation of intermetallic compounds during the first distillation step (a). The applicants have found that the cooling step is particularly capable of reducing the content of copper, nickel, iron and/or zinc in the remaining liquid solder phase.

The applicants submit that step d) further reduces the concentration of the undesired metals in the liquid metal phase on its way to the first distillation step (a). This step however consumes chemicals, as specified. The applicants submit that the cooling step c) brings the extra advantage that the subsequent chemical treatment step d) requires less chemicals. The chemical(s) specified for step d) end up acting as a base, and this base ends up in the second supernatant dross which is removed, at least in step e). The second supernatant dross contains valuable metals, and it is of economic interest to reuse the dross phases separated from the liquid metal phase for recovery of the valuable metals. Many of the known recovery processes for these metals from such dross streams are however of a pyrometallurgical nature. They operate at very high temperatures, so high that most of the construction steel of the equipment which comes in contact with the high temperature process streams, is typically protected with refractory material. The chemical(s) used in step d), and ending up in the second supernatant dross phase separated in step e), are however aggressive towards the most typically used refractory materials that are used in the typical pyrometallurgical non-ferrous metal recovery process steps. The applicants submit that the cooling step c) therefore not only contributes in keeping down the level of the chemical(s) introduced in step d), but also contributes to the level of acceptance for reusing the dross separated in step e) in order to recover metal values therefrom by a pyrometallurgical process.

The applicants have found that in the cooling step c) primarily iron and nickel may chemically bind with tin and that these compounds may come floating on top provided the underlying liquid stream contains sufficient lead, as specified elsewhere in this document, and thus has a sufficiently high density.

The applicants have found that the chemical introduced in step d) is able to bind some of the undesired metals, primarily zinc, and this in a form which also readily comes floating on top under the same provision as explained above for step c).

In an embodiment, the process according to the present invention further comprises the step of removing the first supernatant dross from the bath before step d). The applicants prefer to remove the dross from each pre-treatment step before starting the subsequent pre-treatment step. The applicants have found that this brings the advantage that the overall amount of dross is smaller when compared with the alternative of letting the dross from different steps combine and removing all the dross together at the end of the pre-treatment steps. A dross contains also some tin and/or lead, and these amounts of valuable metals are thus disadvantageously removed from the metal stream which is fed to the first distillation step (a). These amounts of valuable metals also increase the burden of reworking the dross for recovering the metal values therein, including the entrained tin and/or lead, but also including the other metals removed from the liquid metal stream by the pre-treatment.

In an embodiment of the process according to the present invention, the process path for obtaining the feed composition for step c) comprises a metal smelting step and at least one of the drosses from step c) and d) or e) is recycled to the smelting step, preferably all these supernatant drosses that are formed and separated off being recycled to the smelting step. The applicants have found that an upstream smelting step, such as a copper smelter, is not only a suitable non-ferrous metal recovery step for generating a crude solder stream as a by-product which is a suitable feed composition for step c), and for generating by the pre-treatment step the molten solder mixture suitable as feed to first distillation step (a), but it is also a highly suitable point for recycling at least one of the drosses produced in the pre-treatment steps c) and d). The applicants prefer to recycle the first supernatant dross which is generated by the cooling in step c), as well as the second supernatant dross which is removed in step e), following the chemical reaction occurring in step d).

In step d), an alkali metal and/or an earth alkali metal may be added as such, such as adding sodium metal. In such case, the applicants prefer to also add some water in order to react the sodium to its hydroxide and/or oxide, compounds which more readily bind with zinc. The applicants prefer however to add the alkali metal and/or earth alkali metal in a chemically bound form, more preferably as a solid, because the applicants have found that a bound form is better performing, and because the solid typically has a lower density than the pure metallic form and hence any excess remains floating on top of the liquid metal and may be removed together with the second supernatant dross. The bound form may for instance be an oxide, but preferably is a hydroxide. The applicants have found that calcium hydroxide (Ca(OH)₂) and potassium hydroxide (KOH) are also suitable, but the applicants prefer to use sodium hydroxide (NaOH), preferably in its solid form, because it is more efficient on a weight basis for binding a given amount of zinc, and also the most readily available form of suitable compounds. The applicants have further found that the addition of the prescribed compound assists in a better phase separation between the solid second supernatant dross and the underlying liquid metal phase. A better phase separation contributes to a cleaner dross containing less of the prime metals lead and tin, and thus to a more effective and useful recovery of these valuable metals, at the same time also at a higher process efficiency.

In an embodiment of the process according to the present invention comprising step d), the alkali metal and/or the earth alkali metal is added in step d) in a chemically bound form, preferably as a solid. The applicants have found that the addition of a pure metal form may be suitable, but the applicants prefer to use a chemically bound form. The chemically bound form offers the alkali metal and/or the earth alkali metal in a more accessible form for entering into a chemical reaction with the target metals for being removed in the pre-treatment steps. The applicants have found that the reaction products of the chemically bound form with the target metals, such as for instance Na₂ZnO₂, more readily separate from the molten liquid stream by gravity, and may therefore more readily be removed as a cleaner stream, containing less valuable metals.

In an embodiment of the process according to the present invention comprising step d), the alkali metal and/or the earth alkali metal is added in step d) as an oxide or a hydroxide, preferably as a hydroxide. The applicants have found that the process is readily capable of coping with the oxygen and hydrogen which comes with the metal in its chemically bound form. The applicants have found that this form also avoids the introduction of chemical elements which the process would have more difficulty with.

In an embodiment of the process according to the present invention comprising step d), sodium hydroxide is added in step d). The applicants have found that sodium hydroxide is most suitable for this pre-treatment step. The applicants have also found that sodium hydroxide is more readily available and at more attractive supply conditions as compared to other chemically bound forms of alkali metals and/or earth alkali metals.

The inventors have further found that the for step (a) possibly harmful metals do not need to be removed entirely from the solder in order to make the solder suitable for the first vacuum distillation. The inventors have for instance found that the identified problems may be reduced to a practically and economically acceptable level when small amounts of copper remain present in the solder mixture feed to the first distillation step (a). This finding brings the advantage that solder streams may be processed which occur as the by-product from the recovery of copper from primary and/or secondary feedstocks, in particular from secondary feedstocks, even more importantly from feedstocks containing end-of-life materials.

In an embodiment of the process according to the present invention, the molten solder mixture comprising lead and tin which is the feed for the first distillation step (a) comprises, on a weight basis,
- at least 90% of tin and lead together,
- more lead than tin,
- at most 0.1% of the total of chromium (Cr), manganese (Mn), vanadium (V), titanium (Ti) and tungsten (W),
- at most 0.1 % of aluminium (Al)
- at most 0.1% of nickel (Ni)
- at most 0.1 % of iron (Fe), and
- at most 0.1% of zinc (Zn).

The applicants have found that the risk for the formation of potentially disturbing intermetallic compounds is reduced by controlling the presence of these compounds below lower levels.

In an embodiment the molten solder mixture as feed for first distillation step (a) comprises at least 10%wt and better at least 15%wt of tin, preferably at least 20%wt, more preferably at least 22%wt, even more preferably at least 24%wt, preferably at least 26%wt, more preferably at least 28%wt, even more preferably at least 30%wt of tin. The applicants have found that a higher amount of tin in the molten solder reduces the melting point of the mixture, with the advantage that the pre-treatment of the crude solder composition to prepare the solder mixture for a flawless first vacuum distillation has a wider temperature range available. A higher tin content also increases the economic interest in the solder mixture as feed for first distillation step (a) as a feedstock for recovering high purity tin prime products.

In an embodiment the molten solder mixture as feed for first distillation step (a) preferably comprises at least 45%wt and better at least 50%wt, more preferably at least 55%wt, even more preferably at least 60%wt of lead. The applicants have found that a higher amount of lead in the solder mixture improves the separation of the dross from the liquid metal phase.

In an embodiment the molten solder mixture as feed for first distillation step (a) comprises at most 80%wt of lead, preferably at most 75%wt, more preferably at most 70%wt, even more preferably at most 65%wt, preferably at most 60%wt of lead. The applicants have found that an excessive amount of lead in the liquid metal mixture does not further enhance the advantages associated with a higher amount of lead in the mixture as feed to first distillation step (a). The applicants have further found that an excessive amount of lead dilutes the more valuable tin in the metal mixture, whereby the interest in this metal mixture as feed for recovery of high purity tin is reduced.

In an embodiment the molten solder mixture as feed for first distillation step (a) comprises at least 91%wt of tin and lead together, preferably at least 92%wt, more preferably at least 93%wt, even more preferably at least 94%wt, yet more preferably at least 95%wt, preferably at least 96%wt, more preferably at least 96.5%wt, even more preferably at least 97%wt, yet more preferably at least 97.5%wt, preferably at least 98%wt, more preferably at least 98.5%wt, even more preferably at least 98.7%wt of tin and lead together. A higher content of tin and lead together increases the amount of prime products which may be recovered from the molten solder metal mixture, and reduces the amount of usually lower value by-product streams which may emerge from the further purification of the products of the first distillation step (a) into prime product streams. This reduces the burden needed for removing these non-prime products down to a level which is imposed by the prime product specifications, and which desirably should meet as high as possible the international trade standards which are in practice.

In an embodiment the molten solder mixture as feed for first distillation step (a) comprises at most 10%wt antimony (Sb), preferably at most 8%wt, more preferably at most 6%wt, preferably less than 6%wt, even more preferably at most 5.5%wt, preferably at most 5.0%wt, more preferably at most 4.5%wt, even more preferably at most 4.0%wt, yet more preferably at most 3.5%wt, preferably at most 3.0%wt, more preferably at most 2.5%wt, even more preferably at most 2.0%wt, preferably at most 1.5%wt, more preferably at most 1.1%wt of antimony (Sb). The applicants have found that antimony may be allowed in the molten solder metal mixture as feed for first distillation step (a), within specific limits, without creating problems when the molten solder mixture is used as feed for vacuum distillation. The applicants have found that it is important to keep the amount of antimony below the specified upper limit because antimony may also at least partially evaporate under the distillation conditions. If the level of antimony is higher, the amount of antimony leaving the first distillation step with the first concentrated lead stream as overhead product may become more significant.

In an embodiment the molten solder mixture as feed for first distillation step (a) comprises at least 0.42%wt and better more than 0.42%wt of antimony (Sb), preferably at least 0.43%wt, more preferably at least 0.45%wt, even more preferably at least 0.47%wt, preferably at least 0.50%wt, more preferably at least 0.55%wt, even more preferably at least 0.60%wt, yet more preferably at least 0.65%wt, preferably at least 0.75%wt, more preferably at least 1.0%wt, even more preferably at least 1.5%wt, preferably at least 2.0%wt, more preferably at least 2.5%wt of antimony (Sb). The applicants have found that the molten solder metal mixture as feed for first distillation step (a) may contain measurable, and even significant, amounts of antimony, within the specified limits, without this presence of antimony bringing significant impairment to the downstream first distillation step (a) to which the metal mixture may be subjected. The applicants have found that this provides extra freedom of operation for the upstream processes by which the feed stream for the process according to the present invention is provided. Thanks to this freedom these upstream processes are capable of accepting an amount of raw materials in which antimony is present. The applicants have found that significant concentrations of antimony are allowed in the feed for first distillation step (a) without this creating significant difficulties for the process according to the present invention, as well as for the downstream processes which are further upgrading the first concentrated lead stream and the first bottom product which are generated by the first vacuum distillation.

In an embodiment of the process according to the present invention, the molten solder mixture comprising lead and tin which is fed to the first distillation step (a) comprises, on a weight basis, at least 1 ppm wt and at most 5000 ppm wt of copper, preferably at least 2 ppm wt of copper, more preferably at least 3 ppm wt, even more preferably at least 4 ppm wt, yet more preferably at least 5 ppm wt of copper, preferably at least 6 ppm wt, more preferably at least 7 ppm wt, even more preferably at least 8 ppm wt, yet more preferably at least 9 ppm wt of copper, preferably at least 10 ppm wt, more preferably at least 12 ppm wt, even more preferably at least 14 ppm wt, yet more preferably at least 15 ppm wt of copper, preferably at least 16 ppm wt, more preferably at least 18 ppm wt and even more preferably at least 20 ppm wt of copper. The applicants have found that the here specified amounts of copper may be left in the metal mixture as feed to first distillation step (a) without destroying the usefulness of the molten solder metal mixture as feed stream for the first distillation step (a). The inventors have found that the identified problems may be reduced to a practically and economically acceptable level when small amounts of copper remain present in the solder feed to the distillation step. This finding brings the advantage that solder streams may be processed which occur as the by-product from the recovery of copper from primary and/or secondary feedstocks, in particular from secondary feedstocks, even more importantly from feedstocks containing end-of-life materials.

In an embodiment the molten solder mixture as feed for first distillation step (a) comprises at most 4500 ppm wt of copper, preferably at most 4000 ppm wt, more preferably at most 3500 ppm wt, even more preferably at most 3000 ppm wt, yet more preferably at most 2500 ppm wt, preferably at most 2000 ppm wt, more preferably at most 1500 ppm wt, even more preferably at most 1250 ppm wt, yet more preferably at most 1000 ppm wt, preferably at most 800 ppm wt, more preferably at most 600 ppm wt, even more preferably at most 400 ppm wt, yet more preferably at most 200 ppm wt, preferably at most 150 ppm wt, more preferably at most 100 ppm wt, even more preferably at most 75 ppm wt of copper. The applicants have found that the lower the concentration of copper in the molten solder mixture, the lower the risk for the formation of intermetallic compounds when the metal mixture is subjected to the first distillation step (a) for removing at least part of the lead in the mixture by evaporation. The applicants have further found that the lower the copper presence in the molten solder mixture, the lower the concentration of copper in the product streams from the downstream vacuum distillation. This reduces the burden in the further removal of copper from these streams on their path towards becoming prime products, in particular in terms of chemicals consumption and in terms of amounts of by-products formed.

The molten solder mixture as feed to the first distillation step (a) comprises preferably at least 0.0001 %wt of sulphur (S), preferably at least 0.0002% wt, more preferably at least 0.0003% wt, even more preferably at least 0.0005% wt, preferably at least 0.0010% wt, more preferably at least 0.0015% wt, even more preferably at least 0.0020%wt of sulphur. The applicants have found that it is not required to bring the levels of sulphur down to very low levels, such as below the detection limit of 1 ppm wt, in order to achieve the result which is targeted with the control of the sulphur content. On the contrary the presence of sulphur in the metal mixture brings a technical benefit.

In an embodiment the molten solder mixture as feed for first distillation step (a) comprises at most 0.10%wt of sulphur (S), preferably at most 0.070%wt, more preferably at most 0.050%wt, even more preferably at most 0.010%wt, preferably at most 0.0050%wt, more preferably at most 0.0030%wt of sulphur. The applicants have found that the presence of sulphur in the molten solder mixture as feed for first distillation step (a) may cause odour problems, and may pose a problem of industrial hygiene, even if the sulphur containing metal and/or slag and/or dross has cooled and solidified. These problems may present themselves during the operations and during storage, but may even be more important during maintenance interventions. The applicants therefore prefer to bring the levels of sulphur in the molten solder mixture down to within the specified upper limits.

The applicants have found that sulphur quite readily binds with copper to form a copper sulphide (such as CuS), and that the copper sulphide readily separates by gravity from the molten solder mixture containing the two main components in the process, i.e. tin and lead. The presence of sulphur is therefore able to contribute in the removal of Cu in every process step which intends to separate Cu in a second supernatant dross. Although also the addition of Al could be used to remove Cu, the applicants prefer to involve S as a process chemical at this stage in the process, because it is more selective than Al.

The applicants have found that the molten solder mixture as specified may readily be subjected to the first distillation step (a) to remove the major portion of the lead in the composition by evaporation. The applicants have found that such a distillation is able to produce a first concentrated lead stream as overhead which may readily be further purified in soft lead refining step (b) to obtain a soft lead product which corresponds to many of the commercial standards, and at the same time produces in first distillation step (a) a first bottom product which is rich in tin but also comprises the majority of any antimony (Sb) present in the feed to first distillation step (a), preferably together with a minimum presence of lead (Pb).

The applicants have further found that the problem of the formation of intermetallic compounds during the first vacuum distillation in step (a) of the molten solder mixture is further alleviated by leaving at least the preferred concentration of lead in the first bottom product of the first distillation step (a). The applicants believe that this amount of lead has a beneficial impact on keeping the potentially harmful metals better in solution and reducing their tendency for forming the potentially disturbing intermetallic compounds.

The applicants have further found that the presence of the preferred minimum amount of lead in the first bottom product of the first distillation step (a) makes it easier to remove any silver or other precious metals in the first bottom product by means of a crystallizer, using a technique such as is described in CN102534249, which describes a 4-step crystallizer operation for purifying a crude tin stream by removing silver, or as described in WO 2020/157167 A2.

In an embodiment of the present invention, the first bottom product contains only very low amounts of silver and/or other precious metals, such as at most 120 ppm by weight of silver and at most 20 ppm wt of gold (Au). This means that the amount of silver and/or other precious metals that may be recovered is insufficient to justify the inclusion of a silver recovery step on the first bottom product. Provided that also the expected concentration of silver and other precious metals in the high purity tin prime product remains acceptable, the applicants prefer to omit the silver recovery step and to route the first bottom product directly to the second distillation step downstream. Also other feed streams that would otherwise be fed to the crystallisation step may then be joined into the feed to the second distillation step.

In an embodiment of the process according to the present invention, the first bottom product contains silver and the first bottom product is separated by fractional crystallisation into a first silver-enriched liquid drain product at the liquid end of the crystallisation step and a first tin-enriched product at the crystal end of the crystallisation step. The applicants have found that the first bottom product, when containing silver, is highly suitable and of high interest for being separated by fractional crystallisation into a silver-rich drain product and a tin-enriched product. This fractional crystallisation step may fully focus on the removal of silver from the main tin stream, such that the silver content in the ultimate tin prime product produced downstream is sufficiently low and in compliance with the customer expectations.

In particular silver is undesired as a contaminant in commercial grade tin metal when this is used in a number of applications. Significant presence of silver in tin metal deteriorates the mechanical properties of tin metal. Silver presence in tin that is used in tin plating of steel further generates the risk for the occurrence of galvanic corrosion, whereby the wall of the tin can would be corroding from the inside to the outside surface. This represents a major problem for tin cans to be used in the food industry.

In an embodiment of the process according to the present invention, the first bottom product (8) and/or the feed to the fractional crystallization step comprises at least 0.1%wt and at most 20.0%wt of lead.

Preferably the amount of lead in the first bottom product and/or the feed to the crystallisation step is at least 0.15%wt, preferably at least 0.20%wt, more preferably at least 0.30%wt, even more preferably at least 0.40%wt, yet more preferably at least 0.50%wt, preferably at least 0.60%wt, more preferably at least 0.70%wt, even more preferably at least 0.80%wt, preferably at least 0.90%wt and more preferably at least 1.00%wt. The lead is an enabler to the fractional crystallisation step, and acts as a solvent for the silver that the step wants to remove from the main stream of crude tin. The silver prefers to stay with most of the lead and to end up in the drain, and the composition of the drain is approaching the eutectic composition of 38.1%wt/61.9%wt Pb/Sn. Respecting this lower limit for the presence of Pb favours the operability of the fractional crystallisation step, e.g. in that it assures sufficient liquid phase in the crystalliser stages where a good and intimate contact between liquid and crystals is desired for obtaining an efficient separation. As discussed further below, more lead brings also advantages in the second distillation step downstream.

Preferably the first bottom product and/or the feed to the fractional crystallisation step comprises at most 20.0%wt of Pb, preferably at most 18.0%wt, more preferably at most 16.0%wt, even more preferably at most 14.0%wt, preferably at most 12.0%wt of Pb, preferably at most 10.0%wt, more preferably at most 8.0%wt, even more preferably at most 7.5%wt, preferably at most 6.5%wt of Pb, preferably at most 6.0%wt, more preferably at most 5.5%wt, even more preferably at most 5.25%wt, preferably at most 5.00%wt, more preferably at most 4.90%wt, even more preferably at most 4.80%wt, preferably at most 4.00%wt, more preferably at most 3.00%wt, even more preferably at most 2.00%wt of Pb, preferably at most 1.50%wt of Pb. With lower amounts of lead in the feed to the fractional crystallisation step, the applicants have found that the volume of first silver-enriched liquid drain product may be kept lower and the concentration of silver in the first silver-enriched liquid drain product may be kept higher. This brings the advantage that there may be recovered silver from more dilute feedstocks, while at the same time producing a first silver-enriched liquid drain product that is sufficiently high in silver to allow an effective and efficient recovery of the silver thereof. The lower volume and higher silver content of the first silver-enriched liquid drain product are also to the benefit of the efficiency and effectiveness of the process steps for the recovery of the silver from the first silver-enriched liquid drain product.

In an embodiment of the process according to the present invention, the lead concentration in the first bottom product and/or the feed to the fractional crystallization step is at least 3.0 times the silver concentration in the first bottom product. Preferably the amount of lead in the feed to the crystallisation step is at least 4.0, more preferably at least 5.0, even more preferably at least 6.0, and yet more preferably at least 7.0 times the silver concentration in the feed. The applicants have found that respecting this lower limit for the ratio of lead to silver concentration in the feed to the fractional crystallisation step avoids that the first silver-enriched liquid drain product composition approaches an eutectic composition in the ternary diagram of lead/tin/silver.

In an embodiment of the process according to the present invention, the first bottom product and/or the feed to the fractional crystallization step comprises at least 10 ppm wt of silver (Ag) and optionally at most 0.85%wt of silver. Preferably the feed to the fractional crystallisation step, as well as the first bottom product, comprises at least 10 ppm wt of silver (Ag), preferably at least 20 ppm wt, more preferably at least 25 ppm wt, even more preferably at least 30 ppm wt, yet more preferably at least 50 ppm wt, preferably at least 100 ppm wt, more preferably at least 200 ppm wt, even more preferably at least 300 ppm wt, yet more preferably at least 500 ppm wt, preferably at least 750 ppm wt, more preferably at least 1000 ppm wt, even more preferably at least 1100 ppm wt, yet more preferably at least 1200 ppm wt of silver, and optionally at most 0.85%wt of silver, preferably at most 0.80%wt, more preferably at most 0.75%wt, even more preferably at most 0.70%wt, yet more preferably at most 0.65%wt, preferably at most 0.60%wt, more preferably at most 0.55%wt, even more preferably at most 0.50%wt, yet more preferably at most 0.45%wt, preferably at most 0.40%wt, more preferably at most 0.35%wt, even more preferably at most 0.30%wt, yet more preferably at most 0.25%wt, preferably at most 0.20%wt, more preferably at most 0.175%wt or at most 1750 ppm wt, even more preferably at most 1600 ppm wt, yet more preferably at most 1500 ppm wt. A higher silver content in the first bottom product, as well as in the crude tin mixture as feed to the fractional crystallisation step brings the benefit that more silver is available for being recovered, and that the first silver-enriched liquid drain product from the fractional crystallisation step may contain more silver, and hence not only represent a higher economic value but from which the recovery of silver may be made more efficiently and more effectively. Respecting the upper limit for the silver content brings the advantage that the drain composition runs a lower risk for approaching the eutectic composition in the ternary diagram for Pb/Sn/Ag. The upper limit on the silver content in the first bottom product and/or the crude tin mixture as feed to the fractional crystallisation step also brings the advantage that it allows a significant concentration increase from feed to first silver-enriched liquid drain product of the crystalliser, such that the process is able to accept feedstocks that are lower in silver content, i.e. which may be very dilute in Ag.

In an embodiment of the process according to the present invention, the first bottom product and/or the feed to the fractional crystallization step comprises at least 0.1%wt of antimony (Sb). Preferably the first bottom product comprises at least 0.20%wt of antimony, more preferably at least 0.30%wt, even more preferably at least 0.40%wt, preferably at least 0.50%wt, more preferably at least 0.55%wt, even more preferably at least 0.60%wt, yet more preferably at least 0.65%wt, preferably at least 0.75%wt, more preferably at least 1.0%wt, even more preferably at least 1.5%wt, preferably at least 2.0%wt, more preferably at least 2.5%wt of antimony (Sb). The applicants have found that the first bottom product may contain measurable, and even significant, amounts of antimony, within the specified limits, without this presence of antimony bringing significant impairment to the process capabilities. The applicants have found that this provides extra freedom of operation for the upstream processes from which the first bottom product is derived. Thanks to this allowance of an amount of antimony in the first bottom product which they produce as an intermediate stream, these upstream processes are capable of accepting an amount of raw materials in which antimony is present. Antimony may be present in a variety of primary and/or secondary feedstocks for non-ferrous metals, as well as in many end-of-life materials. Antimony may for instance be present in lead which was used since Roman times for plumbing. These materials may now become available as demolition materials, often in combination with copper for tubing and other purposes, and with tin and lead for the solder connections. Allowing an amount of antimony in the first bottom product, provides the upstream processes the capability to accept such mixed end-of-life materials. The applicants have found that significant concentrations of antimony are allowed in the first bottom product without this creating significant difficulties for the process according to the present invention, as well as for the downstream processes which are further upgrading the streams that are generated by the first vacuum distillation step.

The applicants have further found that most of the antimony prefers to stay with the tin in the fractional crystallisation step, and the presence of antimony brings the advantage that it increases the melting point of the crystals that are formed, which facilitates the separations in the crystalliser and causes a clearer separation between the Pb/Ag in the first silver-enriched liquid drain product and the Sn/Sb in the first tin-enriched product.

In an embodiment of the process according to the present invention, the first silver-enriched liquid drain product is recycled, partially and/or temporarily, to the feed of the fractional crystallisation step. This brings the advantage that the enrichment factor for the silver, i.e. the concentration ratio of silver concentration in the net drain product removed from the process relative to the silver concentration in the fresh feed to the process, is further increased. This brings the already explained benefits of (i) making feedstocks that are more dilute in silver acceptable for the process according to the present invention, and (ii) making the further processing of the drain more efficient and effective.

In an embodiment of the process according to the present invention, at least one product from the liquid end of at least one crystalliser in the fractional crystallisation step is at least partially returned to the feed of the first distillation step, preferably the liquid drain from the crystalliser arranged most upstream relative to the flow of tin through the fractional crystallisation step. The applicants have found that this brings an extra capability for reducing the presence of lead in the fractional crystallisation step, such that the amount of net drain to be removed from the process for the recovery of silver may be reduced, and its silver concentration may be further increased. In addition, this recycle broadens the feedstock acceptance to materials that are lower in silver content.

In an embodiment of the process according to the present invention, at least one product from the liquid end of at least one crystalliser in the fractional crystallisation step is at least partially returned to the feed of the crude solder pre-treatment step. This brings the advantage that the concentration of copper in the process according to the present invention, which may have increased due to leakage of copper into the feed of the first distillation step and may have found its way into the fractional crystallisation step, is reduced again because the copper in the recycle is offered a chance to leave with the first and/or the second supernatant dross separated off in the crude solder pre-treatment step.

In an embodiment of the process according to the present invention, the first tin-enriched product and/or the first bottom product is subjected to a second distillation step separating off by evaporation primarily lead and antimony from the first tin-enriched product and/or the first bottom product, thereby producing as overhead product a second concentrated lead stream and a second bottom product. The applicants have found that the first tin-enriched product is highly suitable as feedstock for a high purity tin prime product, because the lead and antimony in the stream may readily be removed by distillation, resulting in a residue that is further enriched in tin. As discussed above, the first bottom product may also be highly suitable, and is preferably directly fed to the second distillation step when its content of silver and/or precious metals is sufficiently low, such that there is no risk for reaching unacceptably high levels of these elements as impurities in the high purity tin prime product obtained downstream, and such that the benefit of operating the silver recovery step in between the first and the second distillation step does not outweigh the extra burden of operating the silver recovery step.

In an embodiment of the process according to the present invention, a fresh feed containing lead is added to the feed of the second distillation step. The applicants have found that an amount of lead is desirable in the feed to the second distillation step, because the lead facilitates the evaporation of antimony. This brings the advantage of facilitating the evaporation of antimony in the second distillation step, hence improving the quality of the separation that may be obtained in the second distillation step. The lead dilutes the vapour phase in the distillation step and thus acts as a kind of carrier for the antimony. As a result, the lead promotes the removal of antimony from the main tin stream and hence contributes in ultimately obtaining a high purity tin prime product.

In an embodiment of the process according to the present invention, the second concentrated lead stream is subjected to a third distillation step separating off by evaporation primarily lead and antimony from the second concentrated lead stream, thereby producing as overhead product a third concentrated lead stream and a third bottom product. The applicants have found that the second concentrated lead stream as overhead of the second distillation step is a highly suitable basis for obtaining a hard lead prime product, because the tin that is entrained in this stream may readily be removed from most of the lead and antimony by another distillation step. The third distillation step may fully target the selective evaporation of antimony, and of lead when present, from its feedstock into the third concentrated lead stream as its overhead.

In an embodiment of the process according to the present invention, a fresh feed containing lead is added to the feed of the third distillation step. The applicants have found that an amount of lead is also desirable in the feed to the third distillation step, because the lead facilitates the evaporation of antimony. This brings the advantage of facilitating the evaporation of antimony in the third distillation step, hence improving the quality of the separation that may be obtained in the third distillation step. The lead dilutes the vapour phase in the distillation step and thus acts as a kind of carrier for the antimony. As a result, the lead promotes the recovery of most of the antimony in the third concentrated lead stream and hence contributes to an efficient production of the hard lead prime product. The second concentrated lead stream may for instance contain about 40/40/20%wt of Pb/Sn/Sb. The applicants have found that this feed composition may further be improved. The applicants prefer to dilute the feed for the third distillation step by the addition of lead containing fresh feed down to about 10-12%wt Sb and/or 18-10%wt of Sn. The applicants have found that this provides more vapour phase in the third distillation step, and also reduces the melting point of the feed. This allows for a better removal of Sb towards the third concentrated lead stream as overhead from the Sn which is staying in the third bottom product. The extra benefit is, if the third bottom product is recycled to a location upstream of the second distillation step, that the better separation in the third distillation step reduces the amount of antimony that circulates over the second and third distillation steps.

In an embodiment of the process according to the present invention, the third bottom product is at least partially and preferably entirely recycled to the feed of the second distillation step and/or to the feed of the fractional crystallisation step. The applicants have found that the third bottom product has a highly suitable composition for being recycled to at least one of the indicated locations upstream in the process according to the present invention, thanks to the high purity in valuable metals and the low content of non-target metals in the third bottom product. This brings the advantage that the valuable metals may be recovered into the appropriate prime products without high process burdens. The applicants prefer to make the selection of the process location for recycling the third bottom product to dependent on the silver content of the stream, because the fractional crystallisation step is able to remove silver and thereby avoid the build-up of silver in the process above acceptable levels.

In an embodiment of the process according to the present invention, the process further comprises the step of removing at least one contaminant selected from the metals arsenic and tin from the third concentrated lead stream, thereby producing a purified hard lead stream as a hard lead product. The applicants have found that the third concentrated lead stream may be further refined by means known in the art to obtain a purified hard lead stream as the hard lead product.

In an embodiment of the process according to the present invention, the second bottom product is further refined to obtain a high purity tin prime product. The applicants have found that the second bottom product is highly suitable for being further refined to obtain a high purity tin prime product having excellent economic value.

In an embodiment of the process according to the present invention, the second bottom product is treated with aluminium metal, preferably in stoichiometric excess relative to the amount of antimony present, preferably accompanied by mixing and cooling the reacting mixture down to below 400°C, followed by separating off the dross containing Al/Sb/As that is formed by the treatment. The applicants have found that the aluminium readily forms solid intermetallic compounds with trace contaminants in the tin stream, in particular with antimony. The applicants prefer to use a stoichiometric excess of aluminium, because this is more effective in removing antimony while any remaining aluminium is fairly readily removable, as described further in this document. The applicants prefer to use 2 kg of aluminium per 0.01%wt of Sb present in 70 tons of the second bottom product. The mixing and cooling are facilitating the reaction and separation of the solid compounds formed from the molten tin. The applicants prefer to cool down to a temperature of about 250°C, because they have found that this provides the better balance between the reaction kinetics favoured by high temperatures and an improved separation, favoured by lower temperatures. The dross containing Al/Sb/As that is formed may be skimmed off and may be recycled to an upstream pyrometallurgical process step. The applicants prefer to collect the dross containing Al/Sb/As in steel drums that are closed and sealed, in order to avoid contact of the dross with water, which could generate the formation of the highly toxic gasses arsine and/or stibine. The aluminium is preferably added as granules, offering a high surface area without leading to dust problems. The applicants prefer to add these granules to a bath without violent mixing, preferably static, in order to avoid that any wet granule could explode due to the sudden contact with the hot liquid tin.

In an embodiment of the process according to the present invention, the second bottom product, post the aluminium treatment and preferably also after the removal of the dross containing Al/Sb/As, is treated with a third base, preferably selected from NaOH, Ca(OH)₂ and Na₂CO₃ and combinations thereof, more preferably NaOH, followed by separating off the dross containing base that is formed by the treatment. The applicants prefer to skim off the dross containing Al/Sb/As before the addition of the third base, in order to need less of that base. The applicants prefer to use NaOH as the third base because this forms a sodium aluminate dross which is more acceptable for recycle to an upstream pyrometallurgical process step. The applicants prefer to perform this treatment iteratively in successively repeated steps and based on an analysis of the tin stream for its aluminium content, in order to save on chemicals consumption. The intended chemistry may generate hydrogen gas, so the applicants prefer to throw an amount of sulphur granules on the reacting liquid, such that the sulphur ignites at the hot process temperatures and burns the hydrogen that may have evolved from the reaction. The dross may be stiffened by adding silicon dioxide, preferably in the form of sand.

In an embodiment of the process according to the present invention, the second bottom product, post the treatment with the third base, is treated with sulphur, followed by separating off the dross containing S that is formed by the treatment. The sulphur reacts with the sodium and forms a Na₂S dross. At the end of this treatment, the applicants prefer to intensify the stirring rate in order to draw in more oxygen from the ambient air, which oxidizes the sulphur remaining after the reaction, and the sulphur oxides that are formed may readily escape from the liquid final product.

In an embodiment of the process according to the present invention, at least a part of the process is electronically monitored and/or controlled, preferably by a computer program. The applicants have found that the control of steps from the process according to the present invention electronically, preferably by a computer program, brings the advantage of a much better processing, with results that are much more predictable and which are closer to the process targets. For instance on the basis of temperature measurements, if desired also pressure and/or level measurements and/or in combination with the results of chemical analyses of samples taken from process streams and/or analytical results obtained on-line, the control program may control the equipment relating to the supply or removal of electrical energy, supply of heat or of a cooling medium, a flow and/or a pressure control. The applicants have found that such monitoring or control is particularly advantageous with steps that are operated in continuous mode, but that it may also be advantageous with steps that are operated in batch or semi-batch. In addition and preferably, the monitoring results obtained during or after the performance of steps in the process according to the present invention are also of use for the monitoring and/or control of other steps as part of the process according to the present invention, and/or of processes that are applied upstream or downstream of the process according to the present invention, as part of an overall process within which the process according to the present invention is only a part. Preferably the entire overall process is electronically monitored, more preferably by at least one computer program. Preferably the overall process is electronically controlled as much as possible.

The applicants prefer that the computer control also provides that data and instructions are passed on from one computer or computer program to at least one other computer or computer program or module of the same computer program, for the monitoring and/or control of other processes, including but not limited to the processes described in this document.

### EXAMPLE

The following example shows how the process according to the present invention may be operated in more detail and how the targeted effect is obtained. The example also shows how the process according to the invention may be part of a larger overall process which leads to more prime products. The enclosed Figure 1 shows a flow diagram of the process steps and sequence that were operated in this example. The compositions reported in this example are expressed in weight units, and were the result of analyses of samples taken daily and averaging the results over a 73 day operating period.

In Figure 1, the numbers represent the following claim features:
- 1.: Crude solder composition as feed to the pre-treatment step 100
- 2.: NaOH added in the pre-treatment step 100
- 3.: Sulphur added in the pre-treatment step 100
- 4.: First supernatant dross from pre-treatment step 100
- 5.: Second supernatant dross from pre-treatment step 100
- 6.: Molten solder mixture obtained from pre-treatment step 100
- 7.: First concentrated lead stream as overhead from vacuum distillation step 200
- 8.: First bottom product of the first vacuum distillation step 200
- 9.: First silver-enriched liquid drain product from the liquid end of the crystallisation step 300
- 10.: First tin-enriched product from crystallisation step 300
- 11.: Fresh feed added to second vacuum distillation step 400
- 12.: Second concentrated lead stream as overhead product from second vacuum distillation step 400
- 13.: Second bottom product from second vacuum distillation step 400
- 14.: Aluminium nuggets to tin refining step 500
- 15.: Third base added in tin refining step 500
- 16.: Sulphur added in tin refining step 500
- 17.: Dross containing Al/Sb/As from tin refining step 500
- 18.: Dross containing base from tin refining step 500
- 19.: Dross containing sulphur from tin refining step 500
- 20.: High purity tin prime product from tin refining step 500
- 21.: Third concentrated lead stream as overhead product from third vacuum distillation step 600
- 22.: Third bottom product, from third vacuum distillation step 600
- 23.: Copper added to soft lead refining step 700
- 24.: First base, added in soft lead refining step 700
- 25.: First oxidant, added in soft lead refining step 700
- 26.: Third supernatant dross formed in soft lead refining step 700
- 27.: Purified soft lead stream or product from soft lead refining step 700
- 28.: Purified hard lead stream or product from hard lead refining step 800
- 29.: Left over of overhead product 21 from previous campaigns
- 30.: Second base, added in hard lead refining step 800
- 31.: Second oxidant, added in hard lead refining step 800
- 32.: Fourth supernatant dross, formed in hard lead refining step 800
- 33.: Fresh feed added to the crude solder pre-treatment step 100
- 34.: Fresh feed added to third vacuum distillation step 600
- 35.: Fresh feed added to fractional crystallisation step 300
- 36.: Fresh feed added to first vacuum distillation step 200
- 100: Pre-treatment step
- 200: First vacuum distillation step
- 300: Fractional crystallisation step
- 400: Second vacuum distillation step
- 500: Tin refining step
- 600: Third vacuum distillation step
- 700: Soft lead refining step
- 800: Hard lead refining step

For the analysis of a molten metal stream, a sample of liquid metal is taken, poured into a mould and allowed to cool to become solid. One surface of the solid sample is prepared by passing the sample one or preferably more times through a Herzog HAF/2 milling machine until a clean and flat surface is obtained. The clean and flat sample surface is then analysed using a spark optical emission spectroscopy (OES) apparatus Spectrolab M from the company Spectro Analytical Instruments (US), also available via the company Ametek (DE), whereby the parameters, crystals, detectors and tube may readily be selected and adapted in order to achieve the most appropriate performance for the desired accuracy and/or detection limit. The analysis offers results for a variety of metals in the sample, including copper, bismuth, lead, tin, antimony, silver, iron, zinc, indium, arsenic, nickel, cadmium and even the element sulphur, and this for most of these metals down to a detection limit of about 1 ppm wt.

For the analysis of a dross, the inventors prefer to use a properly calibrated X-ray fluorescence (XRF) technique, preferably using the PANalytical Axios XRF spectrometer of the company PANalytical B.V. (NL). This technique is also preferred over the OES mentioned above for analysing samples of metals containing significant amounts of contaminants, such as stream 6 and streams upstream thereof, in the flow diagram in the attached Figure 1. Also with this technique, the details may readily be selected and adapted in order to optimize the results in terms of accuracy and/or detection limit most fitting the purpose of the analysis.

The crude solder starting material 1 originated from the refining of copper, lead and tin bearing materials in a copper smelter (not shown) which produces a "black copper" intermediate containing about 85%wt of Cu. This black copper was then subjected in a copper refinery to a series of pyrometallurgical refining steps (not shown) which produce on the one hand a higher purity copper prime product, and on the other hand a number of slag by-products. As part of the refinery operations, the crude solder starting material 1 is recovered from some of these refinery slags. Cleaning of this crude solder is performed by a sequence of pre-treatment steps 100 in order to remove a significant amount of the contained metal impurities, which presence would otherwise risk to negatively affect the downstream vacuum distillation steps. The target impurities for the cleaning steps are primarily Cu, Fe, Ni and/or Zn, and the objective of the crude solder cleaning is that the solder may be processed further, smoothly and flawlessly, using vacuum distillation.

The crude solder 1 was available from the upstream refinery operations at a temperature of about 835°C. In a first step of the cleaning operation sequence 100, the solder was cooled down to 334°C, and this in two steps. In the first cooling step, the crude solder was cooled to about 500°C and a first dross was removed from the surface of the molten liquid metal. In the second cooling step, the crude solder was cooled further down to 334°C and a second dross was removed from the surface of the molten liquid metal . The cooling step formed a total dross which contained the majority of the copper present in the crude solder, and which was removed as a by-product (not shown) and recycled in one of the upstream pyrometallurgical process steps. The total flow rate and the concentrations of the metals of interest in the remaining solder intermediate (stream 1) are provided in Table 1. The copper content in the solder had been decreased down to on average 3.0000%wt by this sequence of cooling steps and dross removals. Also the Fe and the Zn concentrations in the solder had decreased significantly. All the dross phases formed during the cooling operation were removed (not shown) and recycled upstream in the process to the smelter step, so that its valuable metal content could be valorised as much as possible.

**Table 1: The crude solder after the cooling step**

| %wt | Crude solder 1 |
|---|---|
| Tons/day | 98.4 |
| Bi | 0.0163 |
| Cu | 3.0000 |
| Fe | 0.0007 |
| Ni | 0.0015 |
| Pb | 69.5000 |
| Sb | 0.8305 |
| Sn | 26.7414 |
| Zn | 0.0028 |
| Ag | 0.0290 |
| Au | 0.0010 |
| As | 0.0515 |
| Cd | 0.0010 |
| In | 0.0125 |
| S | 0.0025 |
| Te | 0.0007 |
| Total | 100.1914 |

In a second part of the cleaning operation sequence 100, solid sodium hydroxide (stream 2) was added to the solder intermediate of Table 1. In this treatment step, zinc was bound by the sodium hydroxide, presumably to form Na₂ZnO₂, and forming a separate phase which separated as a first supernatant solid dross from the solder and which was removed as stream 4. As a result, the zinc content in the solder stream 6 had further been decreased. The amount of sodium hydroxide was adjusted such that the Zn concentration in the solder was decreased down to 13 ppm weight (Table 2). The dross which was formed in this step was also recycled (stream 4) to the upstream smelter step, where zinc may be fumed out and recovered as zinc oxide dust.

In the next part of the cleaning operation sequence 100, after the addition of sodium hydroxide and the removal of the first supernatant solid dross phase 4, also an amount of elemental sulphur (stream 3), representing about 130% of stoichiometry relative to the amount of copper present in the metal phase, was added to further reduce the copper content of the solder. As elemental sulphur was used a granulated form of sulphur obtainable from the company Zaklady Chemiczne Siarkopol in Tarnobrzeg (PL). The sulphur 3 reacted primarily with copper to form copper sulphides which moved into a second supernatant dross. This second supernatant dross was then removed as stream 5 and recycled to a suitable upstream process step. After the sulphur addition in step 100, a further amount of sodium hydroxide (stream 2) was added to chemically bind any leftover traces of sulphur to form yet another dross. After allowing some time for the reaction, a handful of granulated sulphur 3 was scattered/spread over the bath surface. The sulphur ignited and burned any hydrogen which could have evolved from the liquid as a by-product from the reaction. Subsequently, a small amount of white sand was scattered/spread over the bath in order to dry/stiffen the dross before its removal from the process (stream not shown in the drawing) and its recycle to an upstream process step. The thus obtained cleaned solder (stream 6, of which the flow rate and composition is provided in Table 2) contained only 38 ppm Cu and was further processed as the molten solder mixture obtained from pre-treatment step 100 by means of vacuum distillation in step 200. The second supernatant dross 5 was reprocessed in the upstream refinery process, so that its valuable metal content could be valorised.

**Table 2: Cleaned solder for vacuum distillation**

| Wt% | Molten solder mixture - 6 |
|---|---|
| Tons/day | 72.0 |
| Bi | 0.0326 |
| Cu | 0.0038 |
| Fe | 0.0004 |
| Ni | 0.0009 |
| Pb | 73.1206 |
| Sb | 0.8012 |
| Sn | 25.8694 |
| Zn | 0.0013 |
| Ag | 0.0500 |
| As | 0.0871 |
| Au | 0.0015 |
| Cd | 0.0020 |
| In | 0.0202 |
| S | 0.0053 |
| Te | 0.0010 |
| Total | 99.9973 |

The molten solder mixture 6 was further processed using vacuum distillation (step 200), at an average temperature of 982°C and an average absolute pressure of 0.012 mbar (1.2 Pa). The vacuum distillation step produced two product streams. On the one hand we obtained as overhead stream 7 a first concentrated lead stream which contained mainly lead and on the other hand we obtained as the first bottom product 8 of the first distillation step 200 a product stream which contained mainly tin. The flow rates and compositions of these two distillation product streams 7 and 8 are provided in Table 3.

**Table 3: Product streams of the first vacuum distillation 200**

| Wt% | Overhead 7 | Bottom 8 |
|---|---|---|
| Tons/day | 61.8 | 24.8 |
| Bi | 0.0425 | 0.0014 |
| Cu | 0.0000 | 0.0122 |
| Fe | 0.0000 | 0.0015 |
| Ni | 0.0000 | 0.0028 |
| Pb | 99.5375 | 1.0055 |
| Sb | 0.2233 | 1.9800 |
| Sn | 0.1006 | 96.3129 |
| Zn | 0.0018 | 0.0001 |
| Ag | 0.0031 | 0.1400 |
| As | 0.0746 | 0.0700 |
| Au | 0.0000 | 0.0043 |
| Cd | 0.0024 | 0.0000 |
| In | 0.0057 | 0.0460 |
| S | 0.0071 | 0.0000 |
| Te | 0.0014 | 0.0000 |
| Total | 100.0000 | 99.5767 |

The first vacuum distillation step 200 was performed in continuous mode, and was able to operate during a time period of about three (3) years without the observation of any blocking or clogging of the distillation equipment due to the formation of intermetallic compounds.

The first concentrated lead stream 7 became available from the distillation equipment at a temperature of about 562°C. The temperature of stream 7 was controlled to become about 450°C while being stirred before this stream was further refined. Consecutive volumes of 100-120 tons of stream 7 were allowed to collect in a tank. These volumes were subjected batchwise to the soft lead refining operation 700. A sample was taken from each batch and analysed for As, Sn and Sb to determine the amounts of solid sodium hydroxide (stream 24) and solid sodium nitrate (stream 25) that were required to react with the As, Sn and Sb present in the metal phase, and these amounts were added as first base and first oxidant. Sampling and analysis were repeated after allowing some time for the reaction and after the removal of the third supernatant dross 26 formed by the reaction. If the result was not satisfactory, the process step was repeated. For the total volume of soft lead that was produced over the 73 day operating period, 29.3 metric tons of sodium hydroxide (401 kg/day) and 15.5 metric tons of sodium nitrate (212 kg/day) were used in the process for removing most of the on average 46 kg/day of As, 62 kg/day of Sn and 138 kg/day of Sb, a total of on average 246 kg/day of the 3 elements together, that were present in the feed to step 700 with stream 7. This refining step formed in each batch a third supernatant dross phase which contained the majority of the As, Sn and Sb present in the first concentrated lead stream 7 and which was removed as a by-product (stream 26). The third supernatant dross phase was sampled and analysed for chlorine content using the method according to DIN EN 14582 standard. The analysis showed a chlorine presence of about 129 ppm by weight. The soft lead prime product 27 was then poured into moulds and allowed to solidify and cool to become lead ingots.

In most of the batches, a small amount of copper 23 was added into the feed to step 700 in order to produce a quantity of Cu-containing soft lead. The small amount of copper present is improving the mechanical properties of the soft lead, which makes the soft lead more suitable for being rolled into lead film for the construction industry or for the lead cladding of surfaces. A number of batches which contained above average contents of Bi were also kept apart as Bi-rich soft lead, acceptable in particular end-uses and bringing the advantage that Bi-containing raw materials become more readily acceptable for the process according to the present invention and/or for the upstream processes providing a feedstock for it. This refining of soft lead was performed batchwise in the same equipment as the refining of hard lead, which is discussed further below. The transition between the batches of soft lead and hard lead generates an amount of intermediate quality material, which is commercialised as "unrefined soft lead". The daily average production rates (spread over the 73 day long production period considered) and compositions of these various soft lead end product streams 27 are given in Table 4.

**Table 4: Composition of the soft lead end products 27 (wt%)**

| Soft lead Products 27 | Unrefined Soft lead | Cu-tagged Soft lead | Bi-rich Soft lead |
|---|---|---|---|
| Tons/day | 5.7 | 39.8 | 14.8 |
| Bi | 0.0905 | 0.0319 | 0.0568 |
| Cu | 0.0001 | 0.0428 | 0.0008 |
| Fe | 0.0000 | 0.0000 | 0.0000 |
| Ni | 0.0000 | 0.0000 | 0.0000 |
| Pb | 99.6306 | 99.9026 | 99.9240 |
| Sb | 0.2279 | 0.0000 | 0.0000 |
| Sn | 0.0208 | 0.0006 | 0.0004 |
| Zn | 0.0001 | 0.0001 | 0.0001 |
| Ag | 0.0032 | 0.0034 | 0.0025 |
| As | 0.0259 | 0.0002 | 0.0002 |
| Cd | 0.0002 | 0.0000 | 0.0000 |
| In | 0.0007 | 0.0001 | 0.0001 |
| S | 0.0006 | 0.0003 | 0.0003 |
| Te | 0.0000 | 0.0000 | 0.0000 |
| Au | 0.0000 | 0.0000 | 0.0000 |
| Total | 99.7727 | 99.9820 | 99.9852 |

The first bottom product 8 from first vacuum distillation step 200 was mixed with the third bottom product 22 from the downstream third vacuum distillation step 600 and the mixture was fed to the fourth zone of a first crystalliser having 12 temperature zones. The crystalliser was a cylindrical vessel slightly tilted from being fully horizontal and comprised an internal rotating screw for moving the crystals that are formed from the lower end to the higher end of the cylindrical vessel. The temperature zones were numbered from 0 to 11 from the lower end to the higher end. By appropriate heating and cooling means, a temperature profile was established inside the crystalliser. The temperature of zone 3 which was receiving the feed was about controlled to be about 210°C. The temperature increased stepwise from zone 3 to zone 11 (230-250°C) upwards in the crystalliser, where the tin-rich crystals are removed from the apparatus. The temperature reduced slightly downwards in the crystalliser, from zone 3 to zone 0 (199°C), but was raised again in zone 0, up to about 220°C, to assure that the temperature in that zone always remained above the liquidus line in the phase diagram, such that any growth of solids on the blades of the screw was avoided, which might otherwise introduce the need for operator intervention and temporary decommissioning of the equipment.

Before feeding the feed stream to the crystalliser, the stream was passed through a buffer vessel having a holdup of a few hours of production, in which some mixing smoothens out any temperature changes that may have occurred upstream, such that the temperature of the feed entering the crystalliser into zone 3 is fairly constant and any changes thereof are very slow. In addition the temperature of the feed to zone 3 is maintained somewhat above the temperature in zone 3 of the crystalliser, to avoid solid formation in the supply system. By entering zone 3 of the crystalliser the feed stream is cooled down and comes inside the range within which a stream having this composition separates into a solid phase of small crystals that are enriched in tin content, in equilibrium with a liquid phase that is leaner in tin but richer in lead and in precious metals. The temperature increase of the liquid moving down in the crystalliser from zone 1 further down to 0 brought the benefit that growth of solids on the perimeter of the blades of the screw was prevented in the lower part of the cylindrical vessel, such that there remained sufficient space below the screw blades for allowing liquid to flow from the upper end of the cylindrical vessel to the lower end.

The crystalliser was tilted, such that the liquid phase in the vessel was readily able to move by gravity from the higher end towards the lower end of the apparatus. The turning screw inside the crystalliser moved the crystals in the opposite direction through the continuous liquid phase present in the crystalliser. The liquid level in the crystalliser was maintained below the overflow point for the crystals, to minimize liquid entrainment with the first tin-enriched product, but sufficiently high to facilitate the transfer of heat from vessel wall to vessel content. The crystals ending up at the higher end had become enriched in tin and substantially all of the lead and precious metals from the feed were retrieved in the liquid first drain leaving the crystalliser at the lower end. This first drain further contained tin in a significant amount but at a concentration below the level of tin in the crystalliser feed.

The Sn crystals were removed from the upper end of the first crystalliser and were introduced into the fourth zone (again zone 3) of a second crystalliser also having 12 temperature zones numbered from 0 to 11. In the second crystalliser also a temperature profile was applied, similar to the one in the first crystalliser, which caused a further separation of a second liquid drain from the first tin-enriched crystals before these crystals leave the second crystalliser at the upper end (stream 10).

The antimony entering with the crystalliser feed is primarily following the path of the main flow of tin. The drain from the second crystalliser was recycled to the first crystalliser, where it was mixed in with the feed. When the Pb concentration was deemed excessive, the drain from the second crystalliser was temporarily recycled to the feed of the upstream first vacuum distillation step 200 in order to maintain a higher concentration factor of Ag from vacuum distillation bottom stream 8 to net first silver-enriched liquid drain product 9. Also when the Cu concentration in the crystalliser streams, and thus also in the drain from the second crystalliser, this drain is - at least temporarily - preferably recycled to a process step further upstream than the feed to the first crystalliser, preferably to the feed of the first step of the cleaning operation sequence 100, to be mixed with the crude solder composition 1.

The first silver-enriched liquid drain product was leaving the first crystalliser as a Sn/Pb alloy by-product containing most of the Ag present in the crystalliser feed. The flow rates and compositions of the outlet product streams 9 and 10 of the 2-crystalliser assembly in step 300 are given in Table 5. Sb was found to also enrich in the first tin-enriched crystal phase leaving the second crystalliser, but some Sb was also retrieved in the first silver-enriched liquid drain product. The silver-enriched liquid drain product 9 of Table 5 represents the net drain volume and its composition. Temporarily and depending on its composition, recycle of the silver-enriched liquid drain product was operated from the lower end of the first crystalliser to the feed of the first crystalliser in order to further boost the concentration factor of Ag from the crystalliser feed (streams 8+22) to the net first silver-enriched liquid drain product 9.

**Table 5: Product streams of the crystalliser assembly**

| Wt% | First silver-enriched liquid drain product 9 | First tin-enriched product 10 |
|---|---|---|
| Tons/day | 1.3 | 27.0 |
| Bi | 0.0079 | 0.0010 |
| Cu | 0.2900 | 0.0014 |
| Fe | 0.0012 | 0.0016 |
| Ni | 0.0215 | 0.0023 |
| Pb | 16.5000 | 0.2387 |
| Sb | 0.4020 | 2.1000 |
| Sn | 79.5000 | 97.0536 |
| Zn | 0.0042 | 0.0000 |
| Ag | 2.8000 | 0.0100 |
| As | 0.1144 | 0.0680 |
| Cd | 0.0001 | 0.0000 |
| In | 0.1039 | 0.0411 |
| S | 0.0000 | 0.0000 |
| Te | 0.0000 | 0.0000 |
| Au | 0.0129 | 0.0034 |
| Total | 99.7581 | 99.5211 |

The net first silver-enriched liquid drain product 9 from the first crystalliser was transferred to a downstream purification step (not shown) to recover all precious metals as well as the Sn and Pb. For that purpose, the silver-enriched liquid drain product was cast into anodes and submitted to an electrolysis step wherein pure Pb and Sn containing cathodes were produced and the other metals remain in the anode slimes. Typical conditions of this electrolysis step are: Electrolyte based on hexafluorosilicic acid (H₂SiF₆), fluoroboric acid and/or phenyl sulphonic acid; temperature about 40°C; current density 140-200 A/m²; electrode spacing about 100 mm. Antimony may be added to the anode composition, typically to a concentration of about 1.5%wt. This brings the advantage that the anode slimes remain attached to the anodes and do not disperse in the electrolyte. To avoid full anode passivation, leading to inhibition of the electrolysis, periodically and consecutively a portion of the anodes may be removed from the bath, their anode slimes be removed, e.g. mechanically, and the cleaned anodes may then be replaced in the cell. The anodes may also be designed such that the cleaned anodes have become sufficiently thin such that it is more efficient and/or effective to melt them into new anodes. These anode slimes (about 180 kg/day on average) were recovered, e.g. by filtration, from the entrained electrolyte and these anode slimes contained about 20%wt of silver and also a much smaller concentration of gold, together with most of the other metals present in the first silver-enriched liquid drain product, including antimony and any platinum group metals (PGM's). The anode slimes were further processed for recovery of the silver and the other precious metals. The filtrate was recycled to the electrolysis cell.

The first tin-enriched crystals 10 from the second crystalliser were further processed through the second vacuum distillation step 400, operated at an average temperature of 1049°C and an average absolute pressure of 0.005 mbar (0.5 Pa). Spread over the 73 day operating period, an amount of 157.6 tonnes of lead containing feedstocks 11, on average about 2.2 metric tons per day, was gradually added to the first tin-enriched crystals to keep the solidification point low of the overhead product from step 400. The flow rate and composition of stream 11 is given in Table 6.

**Table 6: Added feedstock in feed to the second vacuum distillation**

| Wt% | Pb containing feedstocks 11 |
|---|---|
| Tons/day | 2.2 |
| Bi | 0.0299 |
| Cu | 0.0161 |
| Fe | 0.0018 |
| Ni | 0.0003 |
| Pb | 58.8711 |
| Sb | 0.0006 |
| Sn | 41.0558 |
| Zn | 0.0001 |
| Ag | 0.0036 |
| As | 0.0015 |
| Cd | 0.0000 |
| In | 0.0017 |
| S | 0.0002 |
| Te | 0.0000 |
| Au | 0.0001 |
| Total | 99.9827 |

The second vacuum distillation step 400 produced two product streams. On the one hand we obtained as overhead product 12 a product stream which contained mainly most of the lead, antimony and silver from the feed, plus some tin, and on the other hand we obtained as the second bottom product 13 a product stream which contained primarily tin with only trace quantities of other components. The flow rates and compositions of these two distillation product streams 12 and 13 are shown in Table 7.

**Table 7: Product streams of the second vacuum distillation**

| Wt% | Overhead 12 | Bottom 13 |
|---|---|---|
| Tons/day | 3.6 | 25.6 |
| Bi | 0.0189 | 0.0004 |
| Cu | 0.0000 | 0.0028 |
| Fe | 0.0000 | 0.0019 |
| Ni | 0.0000 | 0.0025 |
| Pb | 37.8602 | 0.0011 |
| Sb | 13.0000 | 0.3800 |
| Sn | 47.7097 | 99.4584 |
| Zn | 0.0000 | 0.0000 |
| Ag | 0.0560 | 0.0029 |
| As | 0.3900 | 0.0178 |
| Au | 0.0000 | 0.0036 |
| Cd | 0.0000 | 0.0000 |
| In | 0.3050 | 0.0006 |
| S | 0.0001 | 0.0000 |
| Te | 0.0000 | 0.0000 |
| Total | 99.3400 | 99.8719 |

The second vacuum distillation step 400 was performed in continuous mode, and was able to operate during a time period of about three (3) years without the observation of any blocking or clogging of the distillation equipment due to the formation of intermetallic compounds.

The second bottom product 13 from step 400 was further refined batchwise in three consecutive steps, collectively shown in the flow diagram as tin refining step 500. The first tin refining step consisted of cooling the second bottom product 13 and adding an amount of aluminium nuggets (stream 14) to the second bottom product which was having an average temperature of 430°C, under agitation, in order to react with and remove Sb and As down to a level in compliance with established international industry standards. The amount of Al to be added was based on an analysis of the second bottom product 13 and included an extra above the stoichiometric requirement. After the reaction, the composition was again analysed and, if the result was insufficient, in particular the Sb content, an additional amount of Al was introduced for triggering a second reaction step. In total, on average an amount of about 4.3 kg of Al per metric ton of second bottom product 13 was used. About 30 minutes after the last addition, the heating and the agitation were stopped and the liquid molten metal composition was allowed to cool down. During this cooling, down to a temperature of on average about 250°C, a layer of Al/Sb/As containing dross was formed and this dross was periodically removed from the surface of the molten liquid metal. The dross was collected and stored in dry, closed and double-walled steel barrels to prevent contact with water or moisture which could lead to the formation of stibine and/or arsine. The barrels were removed as a by-product (stream 17) and were recycled to an upstream pyrometallurgical process step, where they were introduced unopened into a liquid bath of molten metal and/or slag, thereby avoiding any risk for contact with moisture.

After raising the temperature of the tin product again up to about 330°C, the molten liquid metal was subjected to a second tin refining step in which solid sodium hydroxide (stream 15) was added as the third base. In this treatment step, aluminium was bound by the sodium hydroxide, presumably to form Na₃AlO₃, and forming a separate phase which separated as a supernatant solid dross from the molten liquid metal and which was removed as stream 18. After allowing some time for the reaction, a handful of granulated sulphur was scattered/spread over the bath surface. The sulphur ignited and burned any hydrogen which could have evolved from the molten liquid metal as a by-product from the reaction. As a result, the aluminium content in the second bottom product 13 was further decreased. The amount of sodium hydroxide to be added was adjusted such that the aluminium concentration in the second bottom product decreased down to below the detection limit of 1 ppm weight (Table 8). The dross which was formed in this step was also recycled (stream 18) to an upstream pyrometallurgical process step.

In the third and last tin refining step an amount of elemental sulphur (stream 16) was added to further reduce the copper content of the molten liquid metal and to remove any sodium hydroxide that remained from the second tin refining step. As elemental sulphur was used a granulated form of sulphur obtainable from the company Zaklady Chemiczne Siarkopol in Tarnobrzeg (PL). The sulphur 16 reacted primarily with copper to form copper sulphides and with sodium hydroxide to form Na₂SO₂ which moved into another supernatant dross phase. After the sulphur addition the agitator was kept operating for about 10 minutes to oxidise any leftover traces of sulphur and forming another dross. The dross was removed from the molten liquid metal as stream 19. The thus obtained high purity Sn prime product (stream 20, of which the flow rate and composition is provided in Table 8) contained only 14 ppm Cu and was casted into ingots of 22 kg, stacked, weighed and strapped. The dross containing sulphur 19 was reprocessed in an upstream pyrometallurgical process step.

**Table 8: High purity Sn end product**

| Wt% | High purity Sn 20 |
|---|---|
| Tons/day | 24.6 |
| Bi | 0.0001 |
| Cu | 0.0014 |
| Fe | 0.0004 |
| Ni | 0.0000 |
| Pb | 0.0008 |
| Sb | 0.0160 |
| Sn | 99.9758 |
| Zn | 0.0000 |
| Ag | 0.0030 |
| As | 0.0006 |
| Au | 0.0001 |
| Cd | 0.0000 |
| In | 0.0006 |
| S | 0.0000 |
| Te | 0.0000 |
| Al | 0.0001 |
| Total | 99.9989 |

The overhead product 12 of the second vacuum distillation step 400 was further processed in the third vacuum distillation step 600, operated at an average temperature of 1000°C and an average absolute pressure of 0.033 mbar (3.3 Pa). The third vacuum distillation step 600 produced two product streams. On the one hand we obtained as overhead product 21 a product stream which contained mainly lead and antimony and on the other hand we obtained as the third bottom product 22 a product stream which contained mainly tin and part of the antimony, plus most of the precious metals present in the distillation feed. The flow rates and compositions of these two distillation product streams 21 and 22 are shown in Table 9.

**Table 9: Product streams of the third vacuum distillation**

| Wt% | Overhead 21 | Bottom 22 |
|---|---|---|
| Tons/day | 5.5 | 2.5 |
| Bi | 0.0474 | 0.0011 |
| Cu | 0.0000 | 0.0265 |
| Fe | 0.0000 | 0.0004 |
| Ni | 0.0000 | 0.0075 |
| Pb | 90.1133 | 0.7827 |
| Sb | 9.1014 | 2.1363 |
| Sn | 0.5379 | 96.8647 |
| Zn | 0.0002 | 0.0001 |
| Ag | 0.0100 | 0.0950 |
| As | 0.4700 | 0.0730 |
| Cd | 0.0019 | 0.0000 |
| In | 0.1860 | 0.0297 |
| S | 0.0022 | 0.0000 |
| Te | 0.0013 | 0.0000 |
| Au | 0.0000 | 0.0000 |
| Total | 100.4716 | 100.0170 |

The third vacuum distillation step 600 was performed in continuous mode, and was able to operate during a time period of about three (3) years without the observation of any blocking or clogging of the distillation equipment due to the formation of intermetallic compounds.

The third bottom product 22 was recycled to the first crystalliser of upstream step 300, where it was mixed in with first bottom product 8 from step 200, for recovering its valuable metals content.

The overhead product 21 was further refined in step 800, batchwise in the same equipment that was used during the soft lead refining step 700 of the first concentrated lead stream as overhead stream 7 from the first vacuum distillation step 200. Over the operating period of 73 days, in addition another 810.2 metric tons of overhead product from the third vacuum distillation that had been left over from previous campaigns (stream 29), on average about 11.1 tons/day, was mixed in with stream 21 and refined together therewith. The refining of this hard lead was performed batchwise in volumes of 100-120 tons of total feed. During the 73 days of operating time considered in this example, about 9 days were dedicated to the refining of 1159 tons of hard lead, at about 129 tons/day, and during 43 days the equipment was used for the refining of together 4400 tons of the soft lead products as described above, on average at about 102 tons/day.

The molten liquid metal feed of hard lead for the hard lead refining step 800 was first heated up to about 450°C while being stirred. A sample was taken and analysed for As and Sn to determine the amounts of solid sodium hydroxide (stream 30) and solid sodium nitrate (stream 31) that was deemed required to remove the As and Sn from the molten liquid metal phase, and these amounts were added as the second base and the second oxidant. Over the 73 day operating period that was considered for this example, a total of 15.2 metric tons of sodium hydroxide (on average 208 kg/day) plus 7.6 metric tons of sodium nitrate (on average 104 kg/day) were added into this refining step for removing most of the on average 26 kg/day of As and 32 kg/day of Sn that was coming into step 800 with streams 21 and 29 together. Almost all of the 1502 kg/day of Sb present in the feed streams to hard lead refining step 800 remained in the purified hard lead product 28. This hard lead refining step formed a total fourth supernatant dross phase which contained the majority of the As and Sn present in the overhead products 21 and 29 and which was removed as a by-product (stream 32). The fourth supernatant dross phase was sampled and analysed for chlorine content with the method according to DIN EN 14582. The analysis showed a chlorine presence of about 130 ppm by weight. The flow rate and composition of the purified hard lead end product stream 28 is given in Table 10.

**Table 10: Composition of the hard lead end product**

| Wt% | Hard lead 28 |
|---|---|
| Tons/day | 15.9 |
| Bi | 0.0550 |
| Cu | 0.0000 |
| Fe | 0.0000 |
| Ni | 0.0000 |
| Pb | 91.4680 |
| Sb | 8.9900 |
| Sn | 0.0192 |
| Zn | 0.0001 |
| Ag | 0.0112 |
| As | 0.0025 |
| Cd | 0.0002 |
| In | 0.0005 |
| S | 0.0005 |
| Te | 0.0000 |
| Au | 0.0000 |
| Total | 100.5472 |

This hard lead refining step was thus targeting in step 800 only the removal of a total of on average 58 kg/day of impurities, which is significantly less than the removal target of step 700. In addition, the concentrations of As and Sn in the feed to step 800 were also higher than these in the feed to step 700. Step 800 therefore reaches its targets much easier than step 700. Relative to the total amount of (As+Sn+Sb) that enters the respective lead refining steps 700 and 800, the step 800 consumes significantly less chemicals and also produces significantly less supernatant dross than step 700, which also brings the benefit of causing a lesser burden for recycling the supernatant dross in the upstream pyrometallurgical process. It was also observed that in step 800, As and Sn could successfully be removed to very low levels while hardly any Sb needed to be removed.

Having now fully described this invention, it will be appreciated by those skilled in the art that the invention can be performed within a wide range of parameters within what is claimed, without departing from the scope of the invention, as defined by the claims.

## Claims

1. A process for the production of a purified soft lead product (27), comprising
a) a first distillation step (200) for distilling lead from a molten solder mixture (6) comprising lead and tin to produce as the overhead product a first concentrated lead stream (7) and as the first bottom product a molten crude tin mixture (8), and
b) a soft lead refining step (700) for removing at least one contaminant selected from the metals arsenic, tin and antimony from the first concentrated lead stream (7) obtained in step a) (200) by treating the first concentrated lead stream (7) at a temperature of less than 600°C with a first base (24) and a first oxidant (25) stronger than air, resulting in the formation of a third supernatant dross (26) containing a metalate compound of the corresponding contaminant metal, followed by separating the third supernatant dross (26) from the purified soft lead stream or product (27),
whereby the third supernatant dross (26) from step (b) (700) contains at most 1.0%wt of chlorine, preferably at most 1.0%wt of total halogens.

2. The process according to claim 1 wherein the first oxidant (25) stronger than air in step (b) (700) is selected from NaNOs, Pb(NO₃)₂, KNO₃, ozone, nitric acid, sodium and potassium manganate, sodium and potassium (per)manganate, chromic acid, calcium carbonate (CaCOs), sodium and potassium dichromate, preferably NaNOs, CaCOs, Pb(NO₃)₂ or KNOs, more preferably NaNOs.

3. The process according to claim 1 or 2 wherein the first base (24) is selected from NaOH, Ca(OH)₂ and Na₂CO₃ and combinations thereof, preferably NaOH.

4. The process according to any one of the preceding claims wherein the weight ratio of the first base (24) relative to the first oxidant (25) used in step (b) (700) is in the range of 1.5:1.0 to 4.0:1.0, preferably in the range of 2:1 to 3:1, when respectively NaOH is used as the first base (24) and NaNOs is used as the first oxidant (25) and recalculated according to stoichiometry for when other compounds are being used as the first base (24) and/or the first oxidant (25).

5. The process according to the preceding claim wherein the weight ratio of the first base (24) relative to the first oxidant (25) used in step (b) (700) is at most 2.90 when respectively NaOH is used as the first base (24) and NaNOs is used as the first oxidant (25), and recalculated according to stoichiometry for when other compounds are being used as the first base (24) and/or the first oxidant (25).

6. The process according to any one of the preceding claims wherein in the first bottom product (8) of step (a) (200) is remaining at least 0.10%wt of lead.

7. The process according to any one of the preceding claims wherein the third supernatant dross (26) from step (b) (700) is recycled to a process step upstream of step (a) (200).

8. The process according to any one of the preceding claims wherein the feed for the distillation step (a) (200) is a crude solder composition (1) containing substantial portions of tin and lead and comprising at least 0.16%wt and optionally at most 10%wt of the total of chromium (Cr), manganese (Mn), vanadium (V), titanium (Ti), tungsten (W), copper (Cu), nickel (Ni), iron (Fe), aluminium (Al) and/or zinc (Zn), the feed (1) being available at a temperature of at least 500°C, the process further comprising the step of pre-treating (100) the crude solder composition (1) before step (a) (200) to form the molten solder mixture (6) as feed for the first distillation step (a) (200), the pre-treatment step (100) comprising the steps of
c) cooling the feed crude solder composition (1) down to a temperature of at most 825°C, to produce a bath containing a first supernatant dross (4) which by gravity becomes floating upon a first liquid molten metal phase,
d) adding a chemical (2) selected from an alkali metal, an earth alkali metal, a chemical compound comprising an alkali metal and a chemical compound comprising an earth alkali metal, to the first liquid molten metal phase to form a bath containing a second supernatant dross (5) which by gravity comes floating on top of a second liquid molten metal phase, and
e) removing the second supernatant dross (5) from the second liquid molten metal phase to obtain the molten solder mixture (6).

9. The process according to any one of the preceding claims wherein the molten solder mixture (6) comprising lead and tin which is fed to the first distillation step (a) (200) comprises, on a weight basis,
• at least 90% of tin and lead together,
• more lead than tin,
• at most 0.1% of the total of chromium (Cr), manganese (Mn), vanadium (V), titanium (Ti) and tungsten (W),
• at most 0.1% of aluminium (Al)
• at most 0.1% of nickel (Ni)
• at most 0.1% of iron (Fe), and
• at most 0.1 % of zinc (Zn).

10. The process according to any one of the preceding claims wherein the molten solder mixture (6) comprising lead and tin which is fed to the first distillation step (a) (200) comprises, on a weight basis, at least 1 ppm wt and at most 5000 ppm wt of copper.

11. The process according to any one of the preceding claims wherein the first bottom product (8) contains silver and wherein the first bottom product (8) is separated by fractional crystallisation (300) into a first silver-enriched liquid drain product (9) at the liquid end of the crystallisation step and a first tin-enriched product (10) at the crystal end of the crystallisation step.

12. The process according to claim 11 wherein the first tin-enriched product (10) and/or the first bottom product (8) is subjected to a second distillation step (400) separating off by evaporation primarily lead and antimony from the first tin-enriched product (10) and/or the first bottom product (8), thereby producing as overhead product a second concentrated lead stream (12) and a second bottom product (13).

13. The process according to claim 12 wherein the second concentrated lead stream (12) is subjected to a third distillation step (600) separating off by evaporation primarily lead and antimony from the second concentrated lead stream (12), thereby producing as overhead product a third concentrated lead stream (21) and a third bottom product (22).

14. The process according to claim 13 further comprising the step (800) of removing at least one contaminant selected from the metals arsenic and tin from the third concentrated lead stream (21), thereby producing a purified hard lead stream as a hard lead product (28).

15. The process according to any one of claims 12-14 wherein the second bottom product (13) is further refined to obtain a high purity tin prime product (20).

## Patentansprüche

1. Ein Verfahren zur Herstellung eines gereinigten Weichbleiprodukts (27), welches Folgendes umfasst:
a) einen ersten Destillationsschritt (200) zum Destillieren von Blei aus einer geschmolzenen Lotmischung (6), die Blei und Zinn umfasst, um als das Kopfprodukt einen ersten konzentrierten Bleifluss (7) und als das erste Bodenprodukt eine geschmolzene Rohzinnmischung (8) herzustellen, und
b) einen Weichbleiraffinationsschritt (700) zum Entfernen von zumindest einem Kontaminanten ausgewählt aus den Metallen Arsen, Zinn und Antimon aus dem ersten, in Schritt (a) (200) erhaltenen, konzentrierten Bleifluss (7) durch Behandeln des ersten konzentrierten Bleiflusses (7) bei einer Temperatur von weniger als 600 °C mit einer ersten Base (24) und einem ersten Oxidationsmittel (25), stärker als Luft, was zur Bildung einer dritten überstehenden Krätze (26) führt, welche eine Metallatverbindung des entsprechenden kontaminanten Metalls enthält, gefolgt vom Trennen der dritten überstehenden Krätze (26) von dem gereinigten Weichbleifluss oder -produkt (27),
wobei die dritte überstehende Krätze (26) aus Schritt (b) (700) höchstens 1,0 Gew.-% Chlor enthält, bevorzugt höchstens 1,0 Gew.-% Gesamthalogene.

2. Das Verfahren nach Anspruch 1, wobei das erste Oxidationsmittel (25), stärker als Luft, in Schritt (b) (700) ausgewählt ist aus NaNOs, Pb(NOs)z, KNOs, Ozon, Salpetersäure, Natrium- und Kaliummanganat, Natrium- und Kalium(per)manganat, Chromsäure, Calciumcarbonat (CaCOs), Natrium- und Kaliumdichromat, bevorzugt NaNOs, CaCOs, Pb(NO₃)₂ oder KNOs, noch besser NaNOs.

3. Das Verfahren nach Anspruch 1 oder 2, wobei die erste Base (24) ausgewählt ist aus NaOH, Ca(OH)₂ und Na₂CO₃ und Kombinationen davon, bevorzugt NaOH.

4. Das Verfahren nach irgendeinem der vorigen Ansprüche, wobei das Gewichtsverhältnis der ersten Base (24) zum ersten, in Schritt (b) (700) verwendeten Oxidationsmittel (25) im Bereich von 1,5:1,0 bis 4,0:1,0 liegt, bevorzugt im Bereich von 2:1 bis 3:1, wenn respektive NaOH als die erste Base (24) verwendet wird und NaNOs als das erste Oxidationsmittel (25) verwendet wird, und gemäß Stöchiometrie neu berechnet wird, wenn andere Verbindungen als die erste Base (24) und/oder das erste Oxidationsmittel (25) verwendet werden.

5. Das Verfahren nach dem vorigen Anspruch, wobei das Gewichtsverhältnis der ersten Base (24) zum ersten, in Schritt (b) (700) verwendeten Oxidationsmittel (25) höchstens 2,90 beträgt, wenn respektive NaOH als die erste Base (24) verwendet wird und NaNOs als das erste Oxidationsmittel (25) verwendet wird, und gemäß Stöchiometrie neu berechnet wird, wenn andere Verbindungen als die erste Base (24) und/oder das erste Oxidationsmittel (25) verwendet werden.

6. Das Verfahren nach irgendeinem der vorigen Ansprüche, wobei im ersten Bodenprodukt (8) aus Schritt (a) (200) mindestens 0,10 Gew.-% Blei übrig bleibt.

7. Das Verfahren nach irgendeinem der vorigen Ansprüche, wobei die dritte überstehende Krätze (26) aus Schritt (b) (700) in einen vor Schritt (a) (200) vorgelagerten Verfahrensschritt zurückgeführt wird.

8. Das Verfahren nach irgendeinem der vorigen Ansprüche, wobei die Zufuhr für den Destillationsschritt (a) (200) eine rohe Lotzusammensetzung (1) ist, welche wesentliche Anteile von Zinn und Blei enthält und mindestens 0,16 Gew.-% und optional höchstens 10% Gew.-% der Gesamtheit von Chrom (Cr), Mangan (Mn), Vanadium (V), Titan (Ti), Wolfram (W), Kupfer (Cu), Nickel (Ni), Eisen (Fe), Aluminium (Al) und/oder Zink (Zn) umfasst, wobei die Zufuhr (1) bei einer Temperatur von mindestens 500°C verfügbar ist, das Verfahren ferner den Schritt des Vorbehandelns (100) der rohen Lotzusammensetzung (1) vor Schritt (a) (200) umfasst, um die geschmolzene Lotmischung (6) als Zufuhr für den ersten Destillationsschritt (a) (200) zu bilden, wobei der Vorbehandlungsschritt (100) folgende Schritte umfasst:
c) Abkühlen der zugeführten rohen Lotzusammensetzung (1) auf eine Temperatur von höchstens 825 °C, um ein Bad herzustellen, das eine erste überstehende Krätze (4) enthält, die durch Schwerkraft auf einer ersten Metallschmelze-Flüssigphase treibend wird,
d) Hinzufügen einer Chemikalie (2) ausgewählt aus einem Alkalimetall, einem Erdalkalimetall, einer chemischen Verbindung, welche ein Alkalimetall umfasst, und einer chemischen Verbindung, welche ein Erdalkalimetall umfasst, zur ersten Metallschmelze-Flüssigphase, um ein Bad zu bilden, welches eine zweite überstehende Krätze (5) enthält, die durch Schwerkraft auf einer zweiten Metallschmelze-Flüssigphase treibend wird, und
e) Entfernen der zweiten überstehenden Krätze (5) aus der zweiten Metallschmelze-Flüssigphase, um die geschmolzene Lotmischung (6) zu erhalten.

9. Das Verfahren nach irgendeinem der vorigen Ansprüche, wobei die geschmolzene Lotmischung (6), die Blei und Zinn umfasst und die dem ersten Destillationsschritt (a) (200) zugeführt wird, auf Gewichtsbasis Folgendes umfasst:
• mindestens 90 % von Zinn und Blei zusammen,
• mehr Blei als Zinn,
• höchstens 0,1 % der Gesamtheit an Chrom (Cr), Mangan (Mn), Vanadium (V), Titan (Ti) und Wolfram (W),
• höchstens 0,1 % Aluminium (Al)
• höchstens 0,1 % Nickel (Ni)
• höchstens 0,1 % Eisen (Fe), und
• höchstens 0,1 % Zink (Zn).

10. Das Verfahren nach irgendeinem der vorigen Ansprüche, wobei die geschmolzene Lotmischung (6), die Blei und Zinn umfasst und die dem ersten Destillationsschritt (a) (200) zugeführt wird, auf Gewichtsbasis mindestens 1 Gew.-ppm und höchstens 5.000 Gew.-ppm Kupfer umfasst

11. Das Verfahren nach irgendeinem der vorigen Ansprüche, wobei das erste Bodenprodukt (8) Silber enthält und wobei das erste Bodenprodukt (8) durch fraktionierte Kristallisation (300) in ein erstes, mit Silber angereichertes flüssiges Abflussprodukt (9) am Flüssigende des Kristallisationsschrittes und ein erstes, mit Zinn angereichertes Produkt (10) am Kristallende des Kristallisationsschrittes getrennt wird.

12. Das Verfahren nach Anspruch 11, wobei das erste, mit Zinn angereicherte Produkt (10) und/oder das erste Bodenprodukt (8) einem zweiten Destillationsschritt (400) unterzogen werden, der durch Verdampfung vorwiegend Blei und Antimon von dem ersten, mit Zinn angereicherten Produkt (10) und/oder dem ersten Bodenprodukt (8) abtrennt, wodurch als Kopfprodukt ein zweiter konzentrierter Bleifluss (12) und ein zweites Bodenprodukt (13) erzeugt werden.

13. Das Verfahren nach Anspruch 12, wobei der zweite konzentrierte Bleifluss (12) einem dritten Destillationsschritt (600) unterzogen wird, der durch Verdampfung vorwiegend Blei und Antimon von dem zweiten konzentrierten Bleifluss (12) abtrennt, wodurch als Kopfprodukt ein dritter konzentrierter Bleifluss (21) und ein drittes Bodenprodukt (22) erzeugt werden.

14. Das Verfahren nach Anspruch 13, welches ferner den Schritt (800) des Entfernens von zumindest einem Kontaminanten ausgewählt aus den Metallen Arsen und Zinn aus dem dritten konzentrierten Bleifluss (21) umfasst, wodurch ein gereinigter Hartbleifluss als ein Hartbleiprodukt (28) erzeugt wird.

15. Das Verfahren nach irgendeinem der Ansprüche 12 bis 14, wobei das zweite Bodenprodukt (13) weiter raffiniert wird, um ein hochreines Zinnhauptprodukt (20) zu erhalten.

## Revendications

1. Procédé de production d'un produit de plomb doux purifié (27), comprenant
a) une première étape de distillation (200) pour distiller du plomb à partir d'un mélange fondu de brasure (6) comprenant du plomb et de l'étain pour produire, en tant que produit de tête, un premier courant de plomb concentré (7) et, en tant que premier produit de fond, un mélange brut fondu d'étain (8), et
b) une étape de raffinage de plomb doux (700) pour éliminer au moins un contaminant sélectionné parmi les métaux arsenic, étain et antimoine du premier courant de plomb concentré (7) obtenu à l'étape a) (200) par le traitement du premier courant de plomb concentré (7) à une température inférieure à 600°C avec une première base (24) et un premier oxydant (25) plus puissant que l'air, conduisant à la formation d'une troisième écume surnageante (26) contenant un composé de métallate du métal contaminant correspondant, suivi de la séparation de la troisième écume surnageante (26) à partir du courant ou produit de plomb doux purifié (27),
selon lequel la troisième écume surnageante (26) de l'étape (b) (700) contient au plus 1,0 % en poids de chlore, de préférence au plus 1,0 % en poids d'halogènes au total.

2. Procédé selon la revendication 1, dans lequel le premier oxydant (25) plus puissant que l'air de l'étape (b) (700) est sélectionné parmi NaNOs, Pb(NO₃)₂, KNO₃, l'ozone, l'acide nitrique, le manganate de sodium et de potassium, le (per)manganate de sodium et de potassium, l'acide chromique, le carbonate de calcium (CaCOs), le dichromate de sodium et de potassium, de préférence NaNOs, CaCOs, Pb(NO₃)₂ ou KNO₃, plus préférentiellement NaNO₃.

3. Procédé selon la revendication 1 ou 2, dans lequel la première base (24) est sélectionnée parmi NaOH, Ca(OH)₂ et Na₂CO₃ et les combinaisons de ceux-ci, de préférence NaOH.

4. Procédé selon l'une quelconque des revendications précédentes, dans lequel le rapport massique de la première base (24) par rapport au premier oxydant (25) utilisés dans l'étape (b) (700) est dans la plage de 1,5:1,0 à 4,0:1,0, de préférence dans la plage de 2:1 à 3:1, quand respectivement NaOH est utilisé comme première base (24) et NaNOs est utilisé comme premier oxydant (25) et recalculé en fonction de la stoechiométrie quand d'autres composés sont utilisés comme première base (24) et/ou premier oxydant (25).

5. Procédé selon la revendication précédente, dans lequel le rapport massique de la première base (24) par rapport au premier oxydant (25) utilisés dans l'étape (b) (700) est au plus de 2,90, quand respectivement NaOH est utilisé comme première base (24) et NaNO₃ est utilisé comme premier oxydant (25), et recalculé en fonction de la stoechiométrie quand d'autres composés sont utilisés comme première base (24) et/ou premier oxydant (25).

6. Procédé selon l'une quelconque des revendications précédentes, dans lequel, il reste au moins 0,10 % en poids de plomb dans le premier produit de fond (8) de l'étape (a) (200).

7. Procédé selon l'une quelconque des revendications précédentes, dans lequel la troisième écume surnageante (26) de l'étape (b) (700) est recyclée vers une étape de procédé en amont de l'étape (a) (200).

8. Procédé selon l'une quelconque des revendications précédentes, dans lequel l'alimentation pour l'étape de distillation (a) (200) est une composition brute de brasure (1) contenant des portions substantielles d'étain et de plomb et comprenant au moins 0,16 % en poids et facultativement au plus 10 % en poids du total de chrome (Cr), manganèse (Mn), vanadium (V), titane (Ti), tungstène (W), cuivre (Cu), nickel (Ni), fer (Fe), aluminium (AI) et/ou zinc (Zn), l'alimentation(1) étant disponible à une température d'au moins 500 °C, le procédé comprenant en outre l'étape de prétraitement (100) de la composition brute de brasure (1) avant l'étape (a) (200) pour former le mélange fondu de brasure (6) en tant qu'alimentation pour la première étape de distillation (a) (200), l'étape de prétraitement (100) comprenant les étapes consistant à
c) refroidir la composition brute de brasure (1) de l'alimentation jusqu'à une température d'au plus 825 °C pour produire un bain contenant une première écume surnageante (4) qui, par gravité, devient flottante sur une première phase fondue liquide de métal,
d) ajouter un agent chimique (2) sélectionné parmi un métal alcalin, un métal alcalino-terreux, un composé chimique comprenant un métal alcalin et un composé chimique comprenant un métal alcalino-terreux, à la première phase fondue liquide de métal pour former un bain contenant une deuxième écume surnageante (5) qui, par gravité, devient flottante au-dessus d'une deuxième phase fondue liquide de métal, et
e) retirer la deuxième écume surnageante (5) de la deuxième phase fondue liquide de métal pour obtenir le mélange fondu de brasure (6).

9. Procédé selon l'une quelconque des revendications précédentes, dans lequel le mélange fondu de brasure (6) comprenant du plomb et de l'étain qui est fourni à la première étape de distillation (a) (200) comprend, en poids,
- au moins 90 % en poids d'étain et de plomb conjointement,
- davantage de plomb que d'étain,
- au plus 0,1 % du total de chrome (Cr), manganèse (Mn), vanadium (V), titane (Ti) et tungstène (W),
- au plus 0,1 % d'aluminium (AI),
- au plus 0,1 % de nickel (Ni),
- au plus 0,1 % de fer (Fe), et
- au plus 0,1 % de zinc (Zn).

10. Procédé selon l'une quelconque des revendications précédentes, dans lequel le mélange fondu de brasure (6) comprenant du plomb et de l'étain qui est fourni à la première étape de distillation (a) (200) comprend, en poids, au moins 1 ppm en poids et au plus 5 000 ppm en poids de cuivre.

11. Procédé selon l'une quelconque des revendications précédentes, dans lequel le premier produit de fond (8) contient de l'argent et dans lequel le premier produit de fond (8) est séparé par cristallisation fractionnée (300) en un premier produit de drainage liquide enrichi en argent (9) obtenu à partir de la phase liquide de l'étape de cristallisation et un premier produit enrichi en étain (10) obtenu à partir de la phase cristalline de l'étape de cristallisation.

12. Procédé selon la revendication 11, dans lequel le premier produit enrichi en étain (10) et/ou le premier produit de fond (8) sont soumis à une deuxième étape de distillation (400) séparant par évaporation principalement le plomb et l'antimoine à partir du premier produit enrichi en étain (10) et/ou du premier produit de fond (8), produisant ainsi comme produit de tête un deuxième courant de plomb concentré (12) et un deuxième produit de fond (13).

13. Procédé selon la revendication 12, dans lequel le deuxième courant de plomb concentré (12) est soumis à une troisième étape de distillation (600) séparant par évaporation principalement le plomb et l'antimoine à partir du deuxième courant de plomb concentré (12), pour ainsi produire comme produit de tête un troisième courant de plomb concentré (21) et un troisième produit de fond (22).

14. Procédé selon la revendication 13, comprenant en outre l'étape (800) d'élimination d'au moins un contaminant sélectionné parmi les métaux arsenic et étain du troisième courant de plomb concentré (21), produisant ainsi un courant purifié de plomb durci en tant que produit de plomb durci (28).

15. Procédé selon l'une quelconque des revendications 12-14, dans lequel le deuxième produit de fond (13) est en outre raffiné pour obtenir un produit premier choix d'étain de haute pureté (20).
